# EUROPÄISCHE PATENTSCHRIFT

(11) **EP 4 482 769 B1**
(45) Veröffentlichungstag und Bekanntmachung des Hinweises auf die Patenterteilung: **11.03.2026**
(21) Anmeldenummer: 22843216.7
(22) Anmeldetag: 20.12.2022
(51) Int. Cl.: B65G 61/00, B65G 65/00, B65G 47/08

(54) **VERPACKUNGSANLAGE UND VERFAHREN ZUR ZUFÜHRUNG VON FLÄCHIGEN VERPACKUNGSMITTELN ZU EINER VERPACKUNGSANLAGE**
PACKAGING SYSTEM AND METHOD FOR FEEDING FLAT PACKAGING MATERIALS TO A PACKAGING SYSTEM
SYSTÈME D'EMBALLAGE ET PROCÉDÉ D'ALIMENTATION DE MATÉRIAUX D'EMBALLAGE PLATS À UN SYSTÈME D'EMBALLAGE

(30) Priorität: 22.02.2022 DE 102022104177
(43) Veröffentlichungstag der Anmeldung: 01.01.2025
(73) Patentinhaber: Krones Aktiengesellschaft, 93073 Neutraubling (DE)
(72) Erfinder: PEUTL, August, 93073 Neutraubling (DE); HACK, Andreas, 93073 Neutraubling (DE)
(74) Vertreter: Benninger, Johannes
(86) Internationale Anmeldenummer: PCT/EP2022/087075
(87) Internationale Veröffentlichungsnummer: WO 2023/160864

(56) Entgegenhaltungen:
- EP-A1- 2 135 826
- EP-A1- 3 530 595
- EP-B1- 1 177 980
- WO-A1-2021/043632

## Beschreibung

Die vorliegende Erfindung betrifft eine Verpackungsanlage und ein Verfahren zur Zuführung von flächigen Verpackungsmitteln zu einer Verpackungsanlage gemäß den Merkmalen der unabhängigen Ansprüche.

Die vorliegende Erfindung bezieht sich auf eine Transporteinrichtung für flächige Kartonzuschnitte, insbesondere eine Transporteinrichtung zur Zuführung von aufrechtstehenden, aneinander liegenden Kartonzuschnitten zu einem Verpackungsmodul. Bei einem entsprechenden Verpackungsmodul handelt es sich insbesondere um ein Faltmodul, in dem die Kartonzuschnitte aufgezogen und/oder durch Falten in die gewünschte, insbesondere dreidimensionale, Form gebracht werden. Daran anschließend können die derart vorbereiteten Kartonumverpackungen mit Artikeln o.ä. befüllt werden, beispielsweise mit Getränkebehältern, und für den nachfolgenden Transport auf einer Palette zu größeren Verpackungseinheiten zusammengestellt werden.

Herkömmlicherweise werden die Kartonzuschnitte auf einer Transporteinrichtung stehend zum Verpackungsmodul befördert, insbesondere derart, dass die Kartonzuschnitte jeweils in einer Ebene senkrecht zu der Transportrichtung der Transporteinrichtung angeordnet sind. Um ein Umkippen der im Wesentlichen senkrecht oder leicht in oder entgegen der Transportrichtung geneigt angeordneten Kartonzuschnitte zu verhindern, ist beispielsweise ein endseitig verschiebbarer Anschlagwinkel auf der Transporteinrichtung angebracht, der zur Beladung der Transporteinrichtung mit neuen Kartonzuschnitten zurückgezogen werden muss.

Um eine sichere Zuführung zu gewährleisten, ist gemäß Offenlegungsschrift DE 10 2006 038 656 A eine Fördereinrichtung bekannt, die Gliederbandglieder in Rampenform aufweist, die in Transportrichtung ansteigen. Dadurch können neue Kartonzuschnitte auf die Fördereinrichtung gestellt und gegen bereits vorhandene Kartonzuschnitte geschoben werden, wobei gleichzeitig sichergestellt wird, dass die Kartonzuschnitte nicht mit der Unterkante nach hinten abrutschen.

Aus Platzgründen kann es gewünscht werden oder notwendig sein, ein Magazin oder Bereitstellungsplatz für die Kartonzuschnitte, die über die Transporteinrichtung zum Verpackungsmodul transportiert werden sollen, nicht in einer Flucht zum Verpackungsmodul, sondern seitlich versetzt zu diesem anzuordnen. In diesem Fall muss die Transporteinrichtung schräg zwischen dem Magazin und dem Verpackungsmodul angeordnet werden. Insbesondere ist in diesem Fall eine erste Transportrichtung für die Kartonzuschnitte auf der Transporteinrichtung nicht fluchtend, sondern in einem stumpfen Winkel zu einer Transportrichtung für die Kartonzuschnitte innerhalb des Verpackungsmoduls ausgebildet.

Problematisch ist, dass bei einer schrägen Zuführung von Kartonzuschnitten eine automatisierte Materialversorgung schwierig ist und deshalb eine solche schräge Zuführung in der Regel manuell befüllt werden muss. Weiterhin ist nachteilig, dass die als Schrägmagazin bezeichneten Transporteinrichtung für Kartonzuschnitte in der Regel zumindest bereichsweise unterhalb eines Artikelzulaufs angeordnet und/oder ausgebildet ist. Diese Anordnung bewirkt eine eingeschränkte Zugänglichkeit der Transporteinrichtung, wodurch das Befüllen mit Kartonzuschnitten weiterhin erschwert wird.

Eine Anordnung, bei welcher flächige Verpackungsmittel über eine schräg zuführende Transporteinrichtung einem Verpackungsmodul zugeführt werden, wird in der Offenlegungsschrift DE 10 2018 212 248 A1 beschrieben. Hierbei werden die Verpackungsmittel eine profilierte Förderfläche bewegt, durch welche Profilierungen die Verpackungsmittel derart ausgerichtet werden, dass die Verpackungsmittel in einer gewünschten Ausrichtung in das nachfolgende Verpackungsmodul einlaufen, so dass die Verpackungsmittel direkt in diesem verwendet werden können, ohne erst durch entsprechende Vorrichtungen in eine für die Weiterverarbeitung notwendige Ausrichtung gebracht werden zu müssen.

Ferner sind aus dem Stand der Technik folgende Druckschriften bekannt:
Die EP 3530595 A1 offenbart eine Vorrichtung zum Ansammeln von Paketen. Die Vorrichtung befördert Beutelpakete an eine vorgegebene Position und führt dabei einen Sammelvorgang durch, bei dem die Pakete so ausgerichtet werden, dass Teile jedes Pakets in Dickenrichtung auf Teilen benachbarter Pakete liegen. Somit offenbart EP3530595 A1 den jeweiligen Oberbegriff der unabhängigen Ansprüche 1 und 9.

Die WO 2021/043632 A1 offenbart eine Verpackungsvorrichtung und ein Verfahren zur Herstellung von Verpackungseinheiten. Die Verpackungseinheiten werden durch mindestens zwei Artikel gebildet, die durch ein erstes Sekundärverpackungsmittel und durch mindestens ein zweites Sekundärverpackungsmittel zusammengefasst sind.

Die Aufgabe der Erfindung besteht darin, die Nachteile des bekannten Stands der Technik zu beseitigen und insbesondere eine Automatisierung der Materialversorgung einer Verpackungsanlage mit flächigen Verpackungsmitteln zu ermöglichen bzw. zu verbessern.

Die obige Aufgabe wird durch eine Verpackungsanlage und ein Verfahren zur Zuführung von flächigen Verpackungsmitteln zu einer Verpackungsanlage gelöst, die die Merkmale in den unabhängigen Patentansprüchen umfassen. Weitere vorteilhafte Ausgestaltungen werden durch die Unteransprüche beschrieben.

Die Verpackungsanlage umfasst ein Verpackungsmodul, eine erste Transporteinrichtung für die Zuführung von Artikeln zum Verpackungsmodul in einer ersten Transportrichtung und eine zweite Transporteinrichtung für die Zuführung von flächigen, stehend angeordneten Verpackungsmitteln in einer zweiten Transportrichtung, welche zweite Transportrichtung von der ersten Transportrichtung abweicht.

Bei den flächigen Verpackungsmitteln kann es sich insbesondere um Kartonzuschnitte handeln. Die Kartonzuschnitte können bereits teilweise verklebt ausgebildet und vorbereitet sein. Insbesondere können die Kartonzuschnitte mehrlagig ausgebildet sein. Zum Befüllen mit Artikeln, beispielsweise Getränkebehältern, Flaschen, Dosen etc. müssen die Kartonzuschnitte in einem entsprechend ausgebildeten Handhabungsmodul oder Verpackungsmodul in eine dreidimensionale Form aufgezogen und/oder aufgefaltet werden.

Das Verpackungsmodul umfasst vorzugsweise eine Auffalteinrichtung, welche die zugeführten flächigen Verpackungsmittel in eine dreidimensionale Form aufzieht und/oder auffaltet. Anschließend wird das aufgefaltete Verpackungsmittel mit mindestens einem Artikel befüllt, beispielsweise mit Getränkebehältern in Form von Flaschen oder Dosen. Das derart befüllte Verpackungsmittel kann nunmehr vorzugsweise verschlossen werden, beispielsweise durch Aufbringen eines Klebestreifens, Verkleben von Teilbereichen des Verpackungsmittels, Ausbildung einer Rastverbindung zwischen Teilbereichen des Verpackungsmittels o.ä.

Wenn von einer Anordnung der Verpackungsmittel die Rede ist, so ist darunter zu verstehen, dass die flächigen Verpackungsmittel auf einer Seitenkante aufstehen und nicht etwa auf der flächigen Ausdehnung aufliegend transportiert werden. Der Begriff einer stehenden Anordnung umfasst hierbei sowohl Verpackungsmittel, welche auf der zweiten Transporteinrichtung senkrecht stehend angeordnet sind, als auch Verpackungsmittel, welche eine Neigung gegenüber einer Vertikalebene aufweisen. Hierbei kann es sich insbesondere um eine Neigung handeln, bei welcher eine Oberkante der Verpackungsmittel im Vergleich zur auf der Transporteinrichtung aufstehenden Seitenkante (d.h. die Unterkante) des Verpackungsmittels in Transportrichtung nachlaufend angeordnet ist.

Die Verpackungsanlage umfasst weiterhin eine Handhabungseinrichtung zur Anordnung der flächigen Verpackungsmittel auf der zweiten Transporteinrichtung und mindestens eine Versetzeinheit, welche Versetzeinheit dazu ausgebildet ist, eine Mehrzahl von jeweils in stehender Anordnung befindlichen Verpackungsmitteln gegeneinander zu versetzen. Insbesondere ist die Versetzeinheit dazu ausgebildet einen Verpackungsmittelstapel aufzunehmen und die Verpackungsmittel innerhalb des Verpackungsmittelstapel in eine gegeneinander versetzte Anordnung zu verbringen-

Die mindestens eine Versetzeinheit zeichnet sich durch vertikal ausgerichtete Seitenwände und eine Aufstandsfläche aus, wobei zwischen den Seitenwänden der Versetzeinheit und der Aufstandsfläche jeweils ein von 90 Grad abweichender Winkel ausgebildet ist.

Insbesondere wird die Versetzeinheit durch eine Art oben geöffneten Kasten ausgebildet, welcher in Draufsicht eine rechteckige Oberseite aufweist und welcher eine gegenüber einer Horizontalebene schräg ausgebildete Aufstandsfläche für die Verpackungsmittel aufweist.

Die Anordnung eines Verpackungsmittelstapels mit Verpackungsmitteln in stehender Anordnung innerhalb der Versetzeinheit bewirkt durch die schräge Aufstandsfläche der Versetzeinheit, dass die Verpackungsmittel, insbesondere Kartonzuschnitte, durch die Gewichtskraft nach unten rutschen und sich somit innerhalb des stehenden Verpackungsmittelstapels gegeneinander verschieben.

Die Verpackungsmittel werden dabei derart in der Versetzeinheit angeordnet, dass die unteren Aufstandskanten der Verpackungsmittel im Wesentlichen orthogonal zur Neigung der Aufstandsfläche ausgerichtet sind. Insbesondere werden die jeweiligen Aufstandskanten der einzelnen Verpackungsmittel in unterschiedlichen Horizontalebenen angeordnet, welche Höhe sich in Abhängigkeit von der Anordnung innerhalb der Versetzeinheit ergibt. Insbesondere ergibt sich somit zwischen einander direkt kontaktierenden Verpackungsmitteln ein Höhenversatz, der vorzugsweise immer gleich ausgebildet ist. Insbesondere werden die stehend angeordneten Verpackungsmittels eines Verpackungsmittelstapels durch die Versetzeinheit in eine regelmäßig abgestufte Anordnung verbracht

Unter dem Versetzen der Verpackungsmittel gegeneinander ist somit insbesondere ein Verschieben der Verpackungsmittel gegeneinander parallel zu deren flächiger Ausdehnung und mit einer nach unten gerichteten Richtungskomponente zu verstehen,

Bei Bedarf kann bei aneinanderhaftenden Verpackungsmitteln mit Vibrationen, von oben wirkenden Schiebeelementen, Luftströmung o.ä. gearbeitet werden, um die Haftungsreibung zu überwinden und die Verschiebebewegung der Verpackungsmittel gegeneinander zu unterstützen.

Gemäß einer Ausführungsform kann vorgesehen sein, dass die Versetzeinheit zusätzlichen Einrichtungen zum Zentrieren und/oder Ausrichten umfasst, um die Versetzeinheit beispielsweise bei einem Produktwechsel an ein geändertes Format für die Verpackungsmittel anzupassen, beispielsweise wenn die Verpackungsmittel eine andere Größe aufweisen oder wenn die Verpackungsmittelstapel eine abweichende Höhe bzw. Breite aufweisen.

Die Handhabungseinrichtung ist gemäß einer bevorzugten Ausführungsform dazu ausgebildet, einen Stapel von in einer ersten stehenden Ausrichtung und versetzt zueinander angeordneten Verpackungsmitteln in einer zweiten stehenden Ausrichtung auf der zweiten Transporteinrichtung anzuordnen. Insbesondere entnimmt die Handhabungseinrichtung einen Stapel mit in einer ersten Ausrichtung versetzt zueinander angeordneten Verpackungsmitteln aus einer Versetzeinheit und setzt diesen Stapel in der zweiten stehenden Anordnung auf der zweiten Transporteinrichtung ab. Insbesondere zeichnet sich die zweite Ausrichtung dadurch aus, dass es sich hierbei im Vergleich zur ersten stehenden Ausrichtung um eine um 90 Grad zu einer Flächennormalen der Verpackungsmittel verdrehte Ausrichtung des stehenden Verpackungsmittelstapels handelt.

Insbesondere stehen die Verpackungsmittel in der ersten stehenden Ausrichtung auf einer ersten Seitenkante. Dagegen stehen die Verpackungsmittel in der zweiten stehenden Ausrichtung auf einer zweiten Seitenkante, wobei die erste Seitenkante und die zweite Seitenkante an einem Eckpunkt aufeinandertreffen. Insbesondere ist vorgesehen, dass die erste Seitenkante und die zweite Seitenkante in einem 90 Grad Winkel aufeinandertreffen.

Bei dem Verfahren zur Zuführung von flächigen Verpackungsmitteln zu einer Verpackungsanlage, insbesondere einer vorbeschriebenen Verpackungsanlage, werden dem Verpackungsmodul der Verpackungsanlage jeweils Artikel über die erste Transporteinrichtung in einer ersten Transportrichtung und Verpackungsmittel über die zweite Transporteinrichtung in einer zweiten Transportrichtung zugeführt. Innerhalb des Verpackungsmoduls wird ein Verpackungsmittel aufgefaltet und mindestens ein Artikel wird in dem aufgefalteten Verpackungsmittel angeordnet, wodurch eine Verpackungseinheit ausgebildet wird.

Im Rahmen des Verfahrens ist vorgesehen, dass eine Mehrzahl von in einer ersten stehenden Ausrichtung angeordneten Verpackungsmittel gegeneinander versetzt werden. Werden die Verpackungsmittel beispielsweise als liegende Stapel bereitgestellt, dann kann ein vorgeordneter Verfahrensschritt vorgesehen sein, in welchem die Verpackungsmittel stapelweise in eine stehende Anordnung verbracht werden. Die einen Stapel bildenden Verpackungsmittel, welche sich in stehender Anordnung befinden werden beispielsweise in oben beschriebener Weise vermittels einer Versetzeinheit gegeneinander versetzt.

Die gegeneinander versetzten Verpackungsmittel werden um 90 Grad zu einer Flächennormalen der Verpackungsmittel in eine zweite stehende Ausrichtung verdreht und in dieser zweiten stehenden Ausrichtung auf der zweiten Transporteinrichtung angeordnet.

Insbesondere sind die in der ersten Anordnung unten befindlichen ersten Seitenkanten oder Aufstandskanten nach der Drehung vertikal ausgerichtet. Dadurch ergibt sich, dass die Verpackungsmittel innerhalb des Verpackungsmittelstapels nunmehr nicht mehr nach oben oder unten gegeneinander versetzt, sondern seitlich gegeneinander verschoben angeordnet sind.

In anderen Worten ausgedrückt ist die Handhabungseinrichtung dazu ausgebildet, die Verpackungsmittel derart auf der zweiten Transporteinrichtung anzuordnen, dass eine Flächennormale der Verpackungsmittel in einer Ebene parallel zu einer Vertikalebene angeordnet ist, welche Vertikalebene eine dritte Transportrichtung der Verpackungsmittel innerhalb des Verpackungsmoduls umfasst.

Bei der Verpackungsanlage ist insbesondere vorgesehen, dass die Zufuhr der Verpackungsmittel über die zweite Transporteinrichtung schräg zur Artikelzufuhr über die erste Transporteinrichtung ausgebildet ist. Die weitere Verarbeitung innerhalb des Verpackungsmoduls erfolgt bevorzugt in einer dritten Transportrichtung, welche vorzugsweise parallel oder insbesondere fluchtend zur Zuführung der Artikel über die erste Transporteinrichtung ausgebildet ist.

Insbesondere ist zwischen der zweiten Transporteinrichtung und einer dritten Transporteinrichtung des Verpackungsmoduls ein erster Winkel ausgebildet ist, welcher erste Winkel größer als 90 Grad und kleiner 180 Grad ist, insbesondere welcher erste Winkel zwischen 150 Grad und 175 Grad ist, besonders bevorzugt welcher erste Winkel 165 Grad ist.

Gemäß einer Ausführungsform ist vorgesehen, dass Verpackungsmittel derart auf der zweiten Transporteinrichtung angeordnet werden, dass zwischen einer Flächennormalen des auf der zweiten Transporteinrichtung angeordneten Verpackungsmittels und der zweiten Transportrichtung ein zweiter Winkel ausgebildet ist, welcher zweite Winkel kleiner als 90 Grad und größer als 0 Grad ausgebildet ist, insbesondere welcher zweite Winkel zwischen 5 Grad und 30 Grad ausgebildet ist, besonders bevorzugt welcher Winkel 15 Grad ist.

Bevorzugt ergibt sich hierbei, dass die Summe der Beträge des ersten Winkels und des zweiten Winkels 180 Grad ergibt.

Bei einer mit der ersten Transporteinrichtung fluchtenden Anordnung der dritten Transporteinrichtung ist vorzugsweise zwischen der ersten Transporteinrichtung und der zweiten Transporteinrichtung ein dritter Winkel ausgebildet, welcher sich aus der Differenz von 180 Grad und dem ersten Winkel ergibt. Besonders bevorzugt ist hierbei eine winklige Anordnung von erster Transporteinrichtung und zweiter Transporteinrichtung, welche einen dritten Winkel von circa 15 Grad einschließt.

Eine weitere Ausführungsform einer Verpackungsanlage sieht die Bereitstellung von Verpackungszuschnitten in einem Magazin vor, welches Magazin eine Mehrzahl von Versetzeinheiten umfasst.

Insbesondere werden Verpackungsmittel als stehende Verpackungsmittelstapel in den Versetzeinheiten bereitgestellt, wobei die Verpackungsmittel innerhalb der Versetzeinheiten in bereits beschriebener Weise gegeneinander versetzt angeordnet sind.

Die Handhabungseinrichtung entnimmt jeweils einen Verpackungsmittelstapel mit in erster Ausrichtung gegeneinander versetzt angeordneten Verpackungsmitteln und ordnet diese unter oben beschriebener Drehung auf der zweiten Transporteinrichtung an.

Alternativ kann vorgesehen sein, dass die Handhabungseinrichtung beispielsweise einen Verpackungsmittelstapel übereinander liegenden Verpackungsmaterial erfasst, den Verpackungsmittelstapel in eine stehende Anordnung verbringt und in einer Versetzeinheit einsetzt und freigibt.

Beispielsweise kann vorgesehen sein, dass Verpackungsmittel stapelweise in einer Magazineinheit umfassend ein oder mehrere Stapelmagazine angeordnet sind. In den Stapelmagazinen werden die Verpackungsmittel, welche beispielsweise von einer zentralen Handhabungseinheit von einer Palette abgenommen werden, vorzugsweise stapelweise angeordnet, wobei die Verpackungsmittel insbesondere übereinander liegend angeordnet sind.

Die Stapel von Verpackungsmitteln sind im Stapelmagazin zentriert angeordnet und insbesondere durch eine Einhausung, beispielsweise aus Blech o.ä., eingerahmt. Diese Einhausung dient als Anschlagelement bei der Entnahme von Verpackungsmitteln aus dem Stapelmagazin. Die Verpackungsmittel werden durch die der zweiten Transporteinrichtung zugeordneten Handhabungseinrichtung als Verpackungsmittelstapel aus einem Stapelmagazin entnommen, einer Versetzeinheit zugeführt und anschließend in mit Versatz ausgestatteter Anordnung auf der zweiten Transporteinrichtung angeordnet.

Eine weitere alternative Ausführungsform kann vorsehen, dass einer zentralen Handhabungseinheit, welche zentrale Handhabungseinheit beispielsweise die auf einer Palette bereitgestellten Verpackungsmittel entnimmt, um diese im Magazin anzuordnen, eine Versetzeinheit oder eine alternative Vorrichtung zum Verschränken und Ausrichten der Verpackungsmittel zugeordnet ist. Womit können durch die Handhabungseinheit die Verpackungsmittel bereits mit Versatz ausgestattet in einem Stapelmagazin der Magazineinheit ablegt werden. Die entsprechend mit Versatz ausgestatteten Verpackungsmittel werden anschließend durch die Handhabungseinrichtung als Verpackungsmittelstapel aus dem Stapelmagazin entnommen und können direkt auf der zweiten Transporteinrichtung angeordnet werden.

Durch die oben beschriebene Ausbildung der Versetzeinheit mit geneigter Aufstandsfläche wird der Versatz zwischen den Verpackungsmitteln innerhalb des Verpackungsmittelstapels ausgebildet. Dieser sogenannte Versatzstapel kann nunmehr erneut durch die Handhabungseinrichtung gegriffen werden, wobei der Versatz zwischen den Verpackungsmitteln bestehen bleibt. Der Versatzstapel wird unter Drehung um eine Flächennormale der Verpackungsmittel auf der zweiten Transporteinrichtung abgesetzt, so dass sich der Versatz nunmehr durch eine seitliche Verschiebung der Verpackungsmittel gegeneinander auszeichnet.

Auch andere geeignete Vorrichtungen, welche zur Ausbildung einer verschränkten bzw. versetzten Anordnung der Verpackungsmittel geeignet sind, sollen von der Anmeldung mit umfasst sein.

Vorzugsweise ist eine solche alternative Vorrichtung zur Ausbildung der verschränkten bzw. versetzten Anordnung der Kartonzuschnitte ebenfalls direkt an der zweiten Transporteinrichtung angeordnet oder aber zumindest der zweiten Transporteinrichtung zugeordnet. Alternativ kann die Vorrichtung der zentralen Handhabungseinheit oder der Handhabungseinrichtung zugeordnet sein.

Die Handhabungseinrichtung zur Handhabung der Verpackungsmittelstapel kann beispielsweise durch einen Roboter, insbesondere einen Knickarmroboter, gebildet werden.

Vorzugsweise ist die Handhabungseinrichtung mit einem entsprechenden Greifelement zum Erfassen von Verpackungsmaterialstapeln ausgestattet. Das Greifelement kann beispielsweise als Zangengreifer o.ä. ausgebildet sein.

Gemäß einer Ausführungsform umfasst das Greifelement beispielsweise zwei gegeneinander zustellbare Klemmbacken. Eine alternative Ausführungsform kann vorsehen, dass das Greifelement zwei Klemmbacken umfasst, von denen nur eine verstellbar oder verfahrbar ausgebildet ist und gegen die andere Klemmbacke zugestellt oder von dieser distanziert werden kann.

Eine Ausführungsform kann vorsehen, dass die Handhabungseinrichtung nicht nur für die Handhabung der Verpackungsmittel ausgebildet und ausgestattet ist. Dies ist insbesondere möglich, da die Handhabungseinrichtung hierfür nicht dauerhaft während des Produktionsprozesses benötigt wird. Stattdessen kann die Handhabungseinrichtung verwendet werden, um in solchen sogenannten Stillzeiten weitere Module der Verpackungsanlage bei Bedarf mit Verbrauchsmaterial o.ä. zu versorgen. Beispielsweise kann eine beweglich ausgebildete Handhabungseinrichtung verwendet werden, um Folienrollen an einem Folieneinschlagmodul nachzulegen oder um Etikettenrollen an einem Etikettiermodul nachzulegen usw.

Insbesondere kann die Handhabungseinrichtung hierfür auf einem Schienensystem beweglich angeordnet sein, über welches Schienensystem die Handhabungseinrichtung zu den jeweiligen Modulen bewegt werden kann. Alternativ kann vorgesehen sein, dass die Handhabungseinrichtung auf einem fahrerlosen Transportsystem angeordnet ist, wodurch die Flexibilität der Anwendung weiter erhöht werden kann, da der Bewegungsraum eines fahrerlosen Transportsystems frei programmierbar ist und im Vergleich zu einem Schienensystem nicht auf definierte Wege begrenzt ist.

Weiterhin kann die Transportfläche der zweiten Transporteinrichtung eine Neigung gegenüber einer Horizontalebene aufweisen, insbesondere kann vorgesehen sein, dass Transportfläche der zweiten Transporteinrichtung in Richtung des Verpackungsmoduls ansteigend ausgebildet ist.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine erste Ausführungsform einer Verpackungsanlage.
Figuren 2A bis 2G stellen schematisch die Handhabung der Verpackungsmittel innerhalb der Verpackungsanlage dar.
Fig. 3 zeigt die Bereitstellung von Verpackungsmitteln an einem Palettenstellplatz in einer seitlichen Ansicht.
Fig. 4 zeigt die Bereitstellung von Verpackungsmitteln an einem Palettenstellplatz in einer Darstellung von oben.
Fig. 5 zeigt eine zweite Ausführungsform einer Verpackungsanlage.
Fig. 6 zeigt eine dritte Ausführungsform einer Verpackungsanlage.
Fig. 7 zeigt eine vierte Ausführungsform einer Verpackungsanlage.
Fig. 8 zeigt eine fünfte Ausführungsform einer Verpackungsanlage.
Fig. 9 zeigt einen vergrößerten Ausschnitt einer in Fig. 8 dargestellten Magazineinheit.
Fig. 10 zeigt eine sechste Ausführungsform einer Verpackungsanlage.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

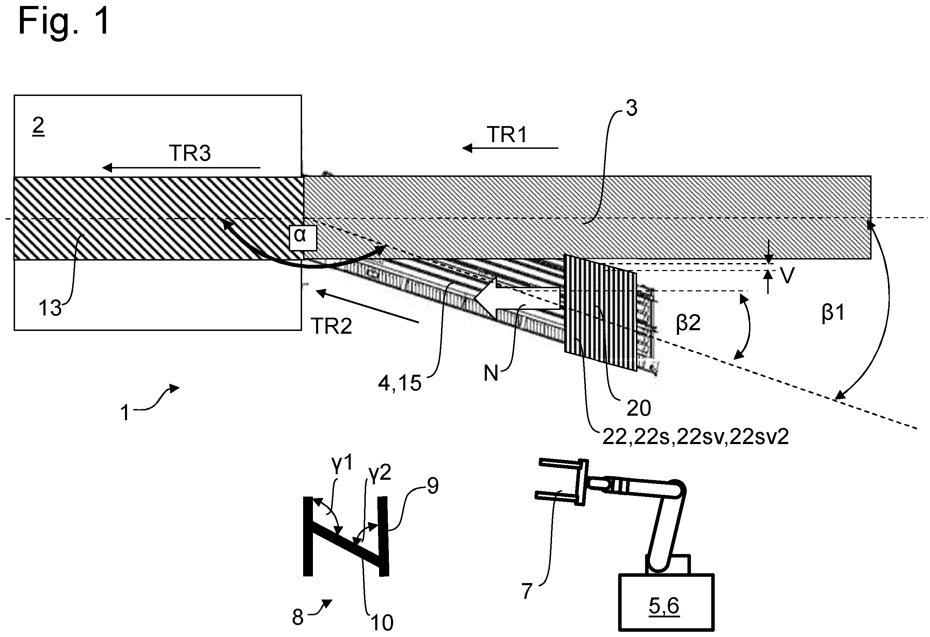

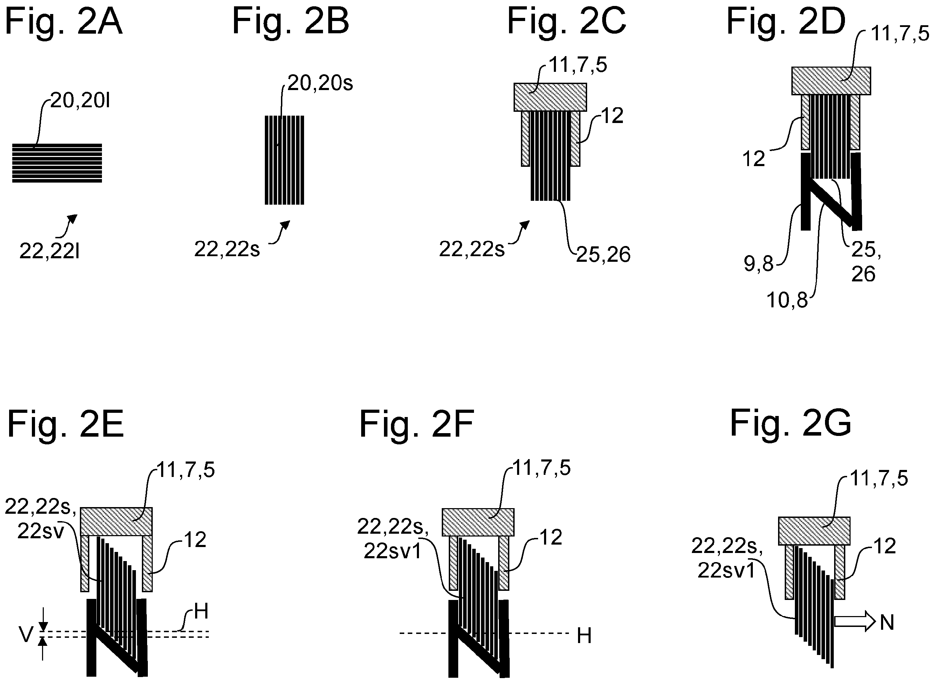

Die schematische Darstellung der Fig. 1 zeigt eine erste Ausführungsform einer Verpackungsanlage 1, während die Figuren 2A bis 2G in schematischer Weise die Handhabung der Verpackungsmittel 20 innerhalb der Verpackungsanlage 1 darstellen.

Die Verpackungsanlage 1 umfasst ein Verpackungsmodul 2, eine erste Transporteinrichtung 3 für die Zuführung von Artikeln zum Verpackungsmodul 2 in einer ersten Transportrichtung TR1 und eine zweite Transporteinrichtung 4 für die Zuführung von flächigen Verpackungsmitteln 20 in einer zweiten Transportrichtung TR2.

Bei den flächigen Verpackungsmitteln 20 kann es sich insbesondere um Kartonzuschnitte 21 handeln. Die Kartonzuschnitte 21 können bereits teilweise verklebt ausgebildet und vorbereitet sein. Insbesondere können die Kartonzuschnitte 21 mehrlagig ausgebildet sein. Zum Befüllen mit Artikeln (nicht dargestellt), beispielsweise Getränkebehältern, Flaschen, Dosen etc. müssen die Kartonzuschnitte 21 in dem Verpackungsmodul 2 in eine dreidimensionale Form aufgezogen und/oder aufgefaltet werden. Dies erfolgt insbesondere in herkömmlich bekannter Weise.

Die Zufuhr der Verpackungsmittel 20 über die zweite Transporteinrichtung 4 ist schräg zur Artikelzufuhr über die erste Transporteinrichtung 3 ausgebildet. Somit weicht die zweite Transportrichtung TR2 von der ersten Transportrichtung TR1 ab. Insbesondere ist zwischen der ersten Transportrichtung TR1 und der zweiten Transportrichtung TR 2 bzw. zwischen der ersten Transporteinrichtung 3 und der zweiten Transporteinrichtung 4 ein Winkel β1 von beispielsweise circa 15 Grad ausgebildet.

Aus der winkligen Anordnung von erster Transporteinrichtung 3 und zweiter Transporteinrichtung 4 ergibt sich insbesondere, dass die zweite Transporteinrichtung 4 zumindest bereichsweise unterhalb der ersten Transporteinrichtung 3 angeordnet ist. Weiterhin ergeben sich aufgrund der weiteren Verarbeitung der Verpackungsmittel 20 innerhalb des Verpackungsmoduls 2 spezielle Anforderungen an die Anordnung der Verpackungsmittel 20 auf der zweiten Transporteinrichtung 4, welche nachfolgend näher beschrieben werden.

Insbesondere ist vorgesehen, dass die weitere Verarbeitung der Verpackungsmittel 20 innerhalb des Verpackungsmoduls 2, insbesondere das Aufziehen und/oder Auffalten der flächigen Verpackungsmittel 20 und das Befüllen der aufgefalteten Verpackungsmittel mit jeweils mindestens einem Artikel, innerhalb des Verpackungsmoduls 2 in einer dritten Transportrichtung TR3 erfolgt. Insbesondere ist die dritte Transportrichtung TR3 fluchtend oder parallel zur ersten Transportrichtung TR1 der Artikelzufuhr ausgebildet. Vorzugsweise ist innerhalb des Verpackungsmoduls 2 mindestens eine dritte Transporteinrichtung 13 für die Verpackungsmittel 20 und/oder die Artikel vorgesehen

Zwischen der zweiten Transportrichtung TR2 und der dritten Transportrichtung TR3 bzw. zwischen der zweiten Transporteinrichtung 4 und der dritten Transporteinrichtung 13 ist dementsprechend ein erster Winkel α ausgebildet, welcher erste Winkel α größer als 90 Grad und kleiner 180 Grad ist, insbesondere welcher erste Winkel α zwischen 150 Grad und 175 Grad ist, besonders bevorzugt welcher erste Winkel α 165 Grad ist.

Vorzugsweise sind die Verpackungsmittel 20 derart auf der zweiten Transporteinrichtung 4 angeordnet, dass eine Flächennormale N der Verpackungsmittel 20 parallel zur dritten Transportrichtung TR3 ausgebildet ist. Insbesondere ist vorgesehen, die Verpackungsmittel 20 derart auf der zweiten Transporteinrichtung 4 anzuordnen, dass eine Flächennormale N beim Eintritt oder Übertritt der Verpackungsmittel 20 in das Verpackungsmodul 2 in einer Ebene oder Parallelebene zu einer Vertikalebene angeordnet ist, welche Vertikalebene die dritte Transportrichtung TR der Verpackungsmittel 20 innerhalb des Verpackungsmoduls 2 umfasst.

Vorzugsweise vorgesehen, die Verpackungsmittel 20 derart auf der zweiten Transporteinrichtung 4 anzuordnen, dass zwischen der Flächennormalen N der Verpackungsmittel 20 und der zweiten Transportrichtung TR2 ein zweiter Winkel β2 ausgebildet ist, welcher zweite Winkel β2 insbesondere denselben Winkelbetrag wie der Winkel β1 aufweist.

Bevorzugt ergibt sich hierbei, dass die Summe der Beträge des ersten Winkels α und des Winkels β1 oder des zweiten Winkels β2 180 Grad ergibt.

Das Verpackungsmodul 2 umfasst vorzugsweise eine Auffalteinrichtung, welche die zugeführten flächigen Verpackungsmittel 20 in die dreidimensionale Form aufzieht und/oder auffaltet. Anschließend wird das aufgefaltete Verpackungsmittel 20 innerhalb des Verpackungsmoduls mit mindestens einem Artikel befüllt, beispielsweise mit Getränkebehältern in Form von Flaschen oder Dosen. Das derart befüllte Verpackungsmittel 20 kann nunmehr zur Ausbildung einer fertigen Verpackungseinheit (nicht dargestellt) vorzugsweise verschlossen werden, beispielsweise durch Aufbringen eines Klebestreifens, Verkleben von Teilbereichen des Verpackungsmittels, Ausbildung einer Rastverbindung zwischen Teilbereichen des Verpackungsmittels 20 o.ä.

Wenn von einer stehenden Anordnung der Verpackungsmittel 20 auf der zweiten Transporteinrichtung 4 die Rede ist, so umfasst dies sowohl Verpackungsmittel 20, welche auf der zweiten Transporteinrichtung 4 senkrecht stehend angeordnet sind, als auch Verpackungsmittel 20, welche eine Neigung gegenüber einer Vertikalebene aufweisen. Hierbei kann es sich insbesondere um eine Neigung handeln, bei welcher eine Oberkante der Verpackungsmittel 20 im Vergleich zur auf der zweiten Transporteinrichtung 4 aufstehenden Unterkante des Verpackungsmittels 20 in Transportrichtung TR2 nachlaufend angeordnet ist.

Die Verpackungsanlage 1 umfasst weiterhin eine Handhabungseinrichtung 5 zur Anordnung der flächigen Verpackungsmittel 20 auf der zweiten Transporteinrichtung 4. Bei der Handhabungseinrichtung 5 kann es sich beispielsweise um einen Knickarmroboter 6 handeln, welcher vorzugsweise mit einem entsprechenden Greifelement 7 zum Erfassen von Verpackungsmaterialstapeln 22 (vergleiche Fig. 2) ausgestattet ist. Das Greifelement 7 ist gemäß einer Ausführungsform als Zangengreifer ausgebildet und umfasst beispielsweise zwei gegeneinander zustellbare Klemmbacken 12. Eine weitere Ausführungsform kann vorsehen, dass das Greifelement 7 zwei Klemmbacken umfasst, von denen nur eine verfahrbar ausgebildet ist und gegen die andere Klemmbacke zugestellt oder von dieser distanziert werden kann.

Weiterhin umfasst die Verpackungsanlage 1 mindestens eine Versetzeinheit 8, welche Versetzeinheit 8 dazu ausgebildet ist, eine Mehrzahl von in stehender Anordnung befindlichen Verpackungsmittel 20 gegeneinander zu versetzen, was insbesondere nachfolgend im Zusammenhang mit Fig. 2 näher dargestellt und beschrieben wird.

Eine Ausführungsform einer Versetzeinheit 8 ist in den Figuren 1 und 2 in einer Seitenansicht dargestellt. Die Versetzeinheit 8 zeichnet sich durch vertikal ausgerichtete Seitenwände 9 und eine Aufstandsfläche 10 aus, wobei zwischen den Seitenwänden 9 und der Aufstandsfläche 10 jeweils ein von 90 Grad abweichender Winkel γ1, γ2 ausgebildet ist. Die Summe der Winkel γ1, γ2 ergibt hierbei 180 Grad.

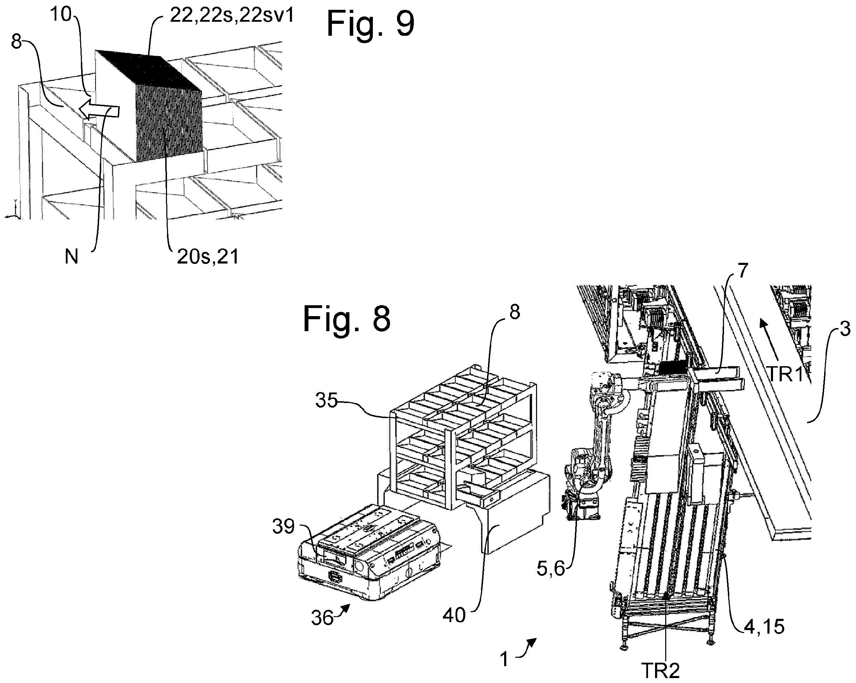

Insbesondere wird die Versetzeinheit 8 durch einen Art oben geöffneten Kasten ausgebildet (vergleiche insbesondere Figuren 8 und 9), welcher Kasten in Draufsicht eine rechteckige Oberseite aufweist und welcher Kasten eine gegenüber einer Horizontalebene schräg ausgebildete Aufstandsfläche 10 für die Verpackungsmittel 20 aufweist.

Werden die Verpackungsmittel 20 stapelweise liegend bereitgestellt (Fig. 2A, Bezugszeichen 20I für liegende Verpackungsmittel und 22I für liegende Verpackungsmittelstapel), so müssen diese zuerst durch entsprechende Handhabung in eine stehende Anordnung verbracht werden (Fig. 2B, Bezugszeichen 20s für stehende Verpackungsmittel und 22s für stehende Verpackungsmittelstapel). Hierfür kann die Handhabungseinrichtung 5 der Verpackungsanlage 1 (vergleiche Fig. 1) Verwendung finden oder aber es ist eine eigenständige geeignete Handhabungseinrichtung hierfür vorgesehen (nicht dargestellt).

Der stehende Verpackungsmittelstapel 22s (Fig. 2B) wird vermittels einer geeigneten Greifeinrichtung 11 erfasst (Fig. 2C) und in die Versetzeinheit 8 eingesetzt (Fig. 2D). Beispielsweise kann die Greifeinrichtung 11 durch das Greifelement 7 der Handhabungseinrichtung 5 gebildet sein. Es kann aber auch eine unabhängige Greifeinrichtung 11 Verwendung finden.

Insbesondere wird der stehende Verpackungsmittelstapel 22s durch die Greifeinrichtung 11 erfasst, indem der Verpackungsmittelstapel 22s beispielsweise zwischen zwei gegeneinander zustellbaren Klemmbacken 12 der Greifeinrichtung 11 klemmend gehalten wird. Die Klemmbacken 12 greifen hierbei insbesondere an den jeweilig nach außen weisenden Flächen der außenseitig den Verpackungsmittelstapel 22s begrenzenden Verpackungsmittel 20s an.

Nach Freigabe des Verpackungsmittelstapel 22s innerhalb der Versetzeinheit 8 (Fig. 2E) bewirkt die schräge Aufstandsfläche 10, dass die Verpackungsmittel 20s durch die Gewichtskraft nach unten rutschen und sich somit gegeneinander verschieben. Insbesondere wird der Verpackungsstapel 22s durch Öffnen der Klemmbacken 12 freigegeben.

Der Verpackungsmittelstapel 22s wird beim Einsetzen in die Versetzeinheit 8 derart in dieser angeordnet, dass die unteren Aufstandskanten 25 der Verpackungsmittel 20s, welche auch als erste Seitenkanten 26 bezeichnet werden, im Wesentlichen orthogonal zur Neigung der Aufstandsfläche 10 ausgerichtet sind. Hierbei werden die jeweiligen Aufstandskanten 25 der einzelnen Verpackungsmittel 20s automatisch in unterschiedlichen Horizontalen H angeordnet, wobei sich die Höhe der jeweiligen Horizontale H in Abhängigkeit von der Anordnung des jeweiligen Verpackungsmittels 20s innerhalb der Versetzeinheit 8 ergibt.

Insbesondere ergibt sich somit zwischen einander direkt kontaktierenden Verpackungsmitteln 20s ein Versatz V, insbesondere ein Höhenversatz, der vorzugsweise zwischen benachbarten Verpackungsmitteln 20s immer gleich ausgebildet ist. Insbesondere werden die stehend angeordneten Verpackungsmittels 20s eines Verpackungsmittelstapel 22s durch die Anordnung des Verpackungsmittelstapels 22s in der Versetzeinheit 8 in eine regelmäßig versetzte oder abgestufte erste Anordnung 22sv1 verbracht.

Unter dem Versetzen der Verpackungsmittel 20s gegeneinander ist somit insbesondere ein Verschieben der Verpackungsmittel 20s gegeneinander, parallel zu deren flächiger Ausdehnung zu verstehen, welches Verschieben eine nach unten gerichtete Richtungskomponente beinhaltet.

Bei Bedarf kann bei aneinanderhaftenden Verpackungsmitteln 20s mit Vibrationen, von oben wirkenden Schiebeelementen, Luftströmung o.ä. gearbeitet werden, um die Verschiebebewegung der Verpackungsmittel 20s gegeneinander innerhalb der Versetzeinheit 8 zu unterstützen.

Der derart mit Versatz V ausgebildete Verpackungsmittelstapel 22sv1 wird nunmehr erneut erfasst, insbesondere durch das Greifelement 7 der Handhabungseinrichtung 5. Beim Erfassen des Verpackungsmittelstapels 22sv wird der ausgebildete Versatz V beibehalten (Fig. 2F) und der Verpackungsmittelstapel 22sv1 wird der weiteren Handhabung zugeführt (Fig. 2G). Insbesondere wird der mit Versatz V ausgebildete Verpackungsmittelstapel 22sv1 unter Drehung um einer Flächennormale N auf der zweiten Transporteinrichtung 4 angeordnet.

Durch die Drehung um die Flächennormale N ergibt sich, dass der Versatz V des Verpackungsmittelstapels 22sv nunmehr nicht mehr in vertikaler Ausrichtung ausgebildet ist. Stattdessen zeigt der auf der zweiten Transporteinrichtung 4 angeordnete Verpackungsmittelstapel 22sv nunmehr einen Versatz V in horizontaler Erstreckung. Der Verpackungsstapel 22sv wird deshalb auch mit dem Bezugszeichen 22sv2 gekennzeichnet (Fig. 1).

Gemäß einer Ausführungsform kann vorgesehen sein, dass die Versetzeinheit 8 mit zusätzlichen Einrichtungen zum Zentrieren und/oder Ausrichten ausgestattet ist (nicht dargestellt), um die Versetzeinheit 8 beispielsweise bei einem Produktwechsel an ein geändertes Format für die Verpackungsmittel 20 anzupassen, beispielsweise wenn die Verpackungsmittel 20 eine andere Größe aufweisen oder wenn die Verpackungsmittelstapel 22 eine andere Höhe bzw. Breite aufweisen.

Die Handhabungseinrichtung 5 der Verpackungsanlage 1 ist dementsprechend gemäß einer bevorzugten Ausführungsform dazu ausgebildet ist, einen Verpackungsmittelstapel 22sv1 von in einer ersten stehenden Ausrichtung und versetzt zueinander angeordneten Verpackungsmitteln 20s in einer zweiten stehenden Ausrichtung 22sv2 auf der zweiten Transporteinrichtung 4 anzuordnen. Insbesondere entnimmt die Handhabungseinrichtung 5 einen Verpackungsmittelstapel 22sv1 mit versetzt zueinander angeordneten Verpackungsmitteln 20 aus einer Versetzeinheit 8 und setzt diesen Verpackungsmittelstapel 22sv1 in der zweiten stehenden Anordnung 22sv2 auf der zweiten Transporteinrichtung 4 ab. Insbesondere zeichnet sich die zweite Ausrichtung 22sv2 dadurch aus, dass es sich hierbei im Vergleich zu ersten stehenden Ausrichtung 22sv1 um eine um 90 Grad zu einer Flächennormalen N der Verpackungsmittel 20 verdrehte Ausrichtung handelt.

Am Greifelement 7 kann ein Stützelement vorgesehen sein, welche sicherstellt, dass die in versetzte Anordnung gebrachten Verpackungsmittel 20 innerhalb des Verpackungsmittelstapels 22sv in dieser versetzten Anordnung verbleiben. Dieses Stützelement kann beispielsweise nach Absetzen des Verpackungsmittelstapels 22sv2 in zweiter Ausrichtung automatisiert zurückgezogen werden. Zusätzlich können die Verpackungsmittel 20 mit einem in das Greifelement 7 integrierten Schieber o.ä. gegen ein Anschlagelement ausgerichtet werden

Insbesondere steht das Verpackungsmittel 20 in der ersten stehenden Ausrichtung 22sv1 auf einer ersten Seitenkante 26 und bei der zweiten stehenden Ausrichtung 22sv2 auf einer zweiten Seitenkante (nicht dargestellt), wobei die erste Seitenkante 26 und die zweite Seitenkante an einem Schnittpunkt einen Eckpunkt des Verpackungsmittels 20 ausbilden. Insbesondere ist vorgesehen, dass die erste Seitenkante 26 und die zweite Seitenkante einen 90 Grad Winkel einschließen.

Insbesondere sind die in der ersten Anordnung 22sv1 unten befindlichen ersten Seitenkanten 26 oder Aufstandskanten 25 nach der Drehung um die Flächennormale N vertikal ausgerichtet. Dadurch ergibt sich, dass die Verpackungsmittel 20 innerhalb des Stapels 22sv2 nunmehr nicht mehr nach oben oder unten gegeneinander versetzt, sondern seitlich gegeneinander verschoben angeordnet sind.

Nachfolgend wird für die zweite Transporteinrichtung 4 zur Bereitstellung und Zuführung von Verpackungsmitteln 20 zum Verpackungsmodul 2 auch der Begriff Schrägmagazin 15 als Synonym verwendet. Der Begriff Schrägmagazin 15 bezeichnet also eine bewegliche Vorrichtung = (zweite Transporteinrichtung 4), über welcher die Verpackungsmittel 20 in zweiter Transportrichtung TR2 dem Verpackungsmodul 2 zugeführt werden.

Eine Ausführungsform eines Systems zur automatisierten Versorgung des Schrägmagazins 15 mit Verpackungsmitteln 20, insbesondere mit Kartonzuschnitten 21, umfasst vorzugsweise folgende Komponenten: Handhabungseinrichtung 5 gebildet durch einen stationär am Schrägmagazin 15 ausgebildeten Roboter zum stapelweisen Anordnen der Kartonzuschnitte 21 in das Schrägmagazin 15, welcher Roboter mit einem entsprechenden Greifelement 7 ausgestattet ist.

Optional kann dem Greifelement 7 eine Trenneinheit zur Auftrennung der Kartonzuschnitte 21 bei der stapelweisen Entnahme der Kartonzuschnitte 21 von einer Palette aufweisen.

Optional kann die Versetzeinheit 8 zum Verschränken und Ausrichten der Kartonzuschnitte 21 oder eine alternative Vorrichtung zum Verschränken der Kartonzuschnitte 21 direkt an dem Greifelement 7 der Handhabungseinrichtung 5 angeordnet und/oder ausgebildet sein.

Eine weitere Ausführungsform kann vorsehen, dass die Versetzeinheit 8 oder eine alternative Vorrichtung zum entsprechenden Verschränken und Ausrichten der Kartonzuschnitte 21 direkt an der zweiten Transporteinrichtung 4 angeordnet ist. Die Verpackungsmittelstapel 22 werden dann unverschränkt von der Handhabungseinrichtung 5, insbesondere einem Roboter o.ä. an die Versetzeinheit 8 oder die alternative Vorrichtung der zweiten Transporteinrichtung 4 übergeben und die Kartonzuschnitte 21 werden innerhalb des Verpackungsmittelstapels 22 entsprechend ausgerichtet bzw. verschränkt und anschließend direkt weiter in Richtung des Verpackungsmoduls 2 geführt.

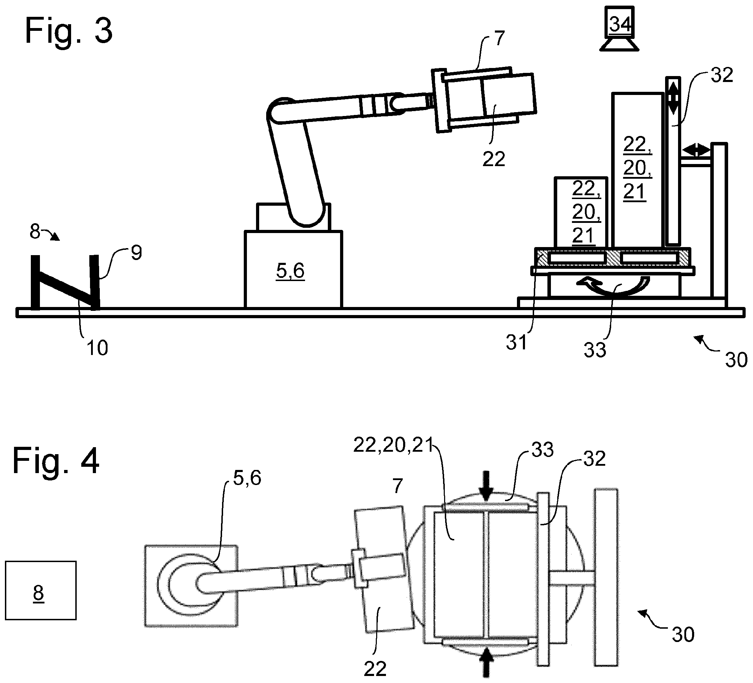

Die Bereitstellung der Kartonzuschnitte 21 am Standort der Handhabungseinrichtung 5 kann beispielsweise über Paletten 31 erfolgen, wie dies in den Figuren 3 und 4 dargestellt ist. Insbesondere zeigt Fig. 3 die Bereitstellung von Verpackungsmitteln 20 an einem Palettenstellplatz 30 in einer seitlichen Darstellung und Fig. 4 zeigt eine Ansicht von oben.

Neben der Handhabungseinrichtung 5 ist ein Palettenstellplatz 30 zur Bereitstellung der Paletten 31 mit darauf angeordneten Verpackungsmittelstapeln 22 vorgesehen. Bevorzugt ist der Palettenstellplatz 30 mit einer insbesondere verstellbaren Anschlagwand 32 zum Gegenhalten der Verpackungsmittel 20 bzw. Kartonzuschnitte 21 bei der Aufnahme von Verpackungsmittelstapel 22 durch das Greifelement 7 der Handhabungseinrichtung 5.

Optional kann am Palettenstellplatz 3 eine Dreheinrichtung 33 vorgesehen sein. Die Dreheinrichtung 33 ist insbesondere zur Drehung um eine vertikale Drehachse ausgebildet, um die Orientierung der Palette 31 an die Handhabungseinrichtung 5 anzupassen. Bevorzugt wird die Palette 31 dabei derart gedreht, dass die Kartonzuschnitte 21 bevorzugt quer zu ihrer Längsrichtung in Bezug auf die Handhabungseinrichtung 5 ausgerichtet sind.

Weiterhin kann eine Zentriereinrichtung 35 zum seitlichen Zentrieren der Kartonzuschnitte 21 bzw. Verpackungsmittelstapel 22 auf der Palette 31 vorhanden sein.

Gemäß einer Ausführungsform ist der Palettenstellplatz 30 für die Paletten 31 ortsfest ausgebildet. Hierbei ist die Bereitstellung der Paletten 31 mit den Verpackungsmittelstapeln 22 manuell und/oder automatisiert möglich, beispielsweise manuell mittels Hubwagen, Ameise oder per Stapler oder automatisiert über einen Palettentransporteur, ein fahrerloses Transportsystem (AGV) o.ä.

Alternativ könnten die Paletten 31 mit den Verpackungsmittelstapeln 22 mittels eines fahrerlosen Transportsystem angeliefert werden (nicht dargestellt) und direkt auf diesen bereitgestellt werden. In diesem Fall kann vorgesehen sein, dass das fahrerlose Transportsystem mit einer Anschlagwand ausgestattet ist, so dass die Palette 31 auf diesem verbleiben kann und dass Entladen der Palette 31 direkt vom fahrerlosen Transportsystem aus erfolgen kann.

Weiterhin kann an der Handhabungseinrichtung 5, insbesondere am Greifelement 7, oder oberhalb des Palettenstellplatzes 30 ein Sensorsystem 34 angeordnet sein, um die genaue Lage der Kartonzuschnitte 21 auf der Palette 31 zu ermitteln. Das Sensorsystem 34 kann beispielsweise durch eine Kamera, einen Laserscanner, einen Taster o.ä. gebildet sein.

Weiterhin ist der Handhabungseinrichtung 5 eine Versetzeinheit 8 zugeordnet, wie sie insbesondere im Zusammenhang mit den Figuren 2 detailliert beschrieben worden ist.

Die Paletten 31 mit den gestapelten Kartonzuschnitten 21 können in einer zentralen Handhabungseinheit (nicht dargestellt) kontrolliert und entpackt werden. Bei bereits entpackten Paletten 31 können zur Stabilisierung der Kartonzuschnitte 21 auf der Palette 31 während des Transports zum Schrägmagazin 15 bei Bedarf Niederhalter von oben und/oder seitliche Zentrierungen zum Einsatz kommen.

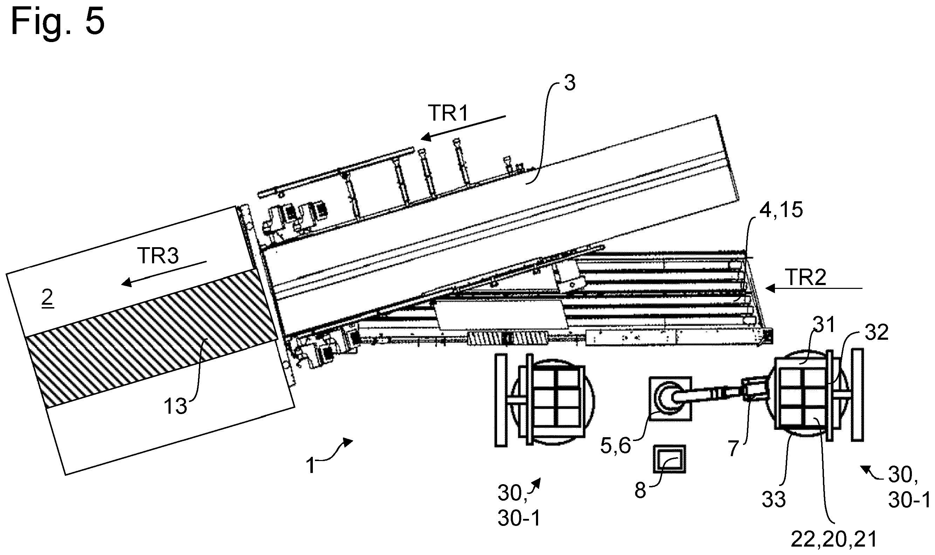

Die Fig. 5 zeigt eine zweite Ausführungsform einer Verpackungsanlage 1. Hierbei ist insbesondere die Bereitstellung der Verpackungsmittel 20 an zwei Palettenstellplätzen 30-1 und 30-2 vorgesehen, die sich in Reichweite der Handhabungseinrichtung 5 befinden. Insbesondere ist die Handhabungseinrichtung 5 derart zwischen den beiden Palettenstellplätzen 30-1, 30-2 angeordnet, dass die Handhabungseinrichtung 5 je nach Verfügbarkeit von einer der beiden Palettenstellplätze 30-1, 30-2 jeweils Verpackungsmittelstapel 22 aufnehmen kann. Zudem ist die Reichweite der Handhabungseinrichtung 5 ausreichend, dass die Handhabungseinrichtung sowohl das Schrägmagazin 15 und als auch die Versetzeinheit 8 bedienen kann.

Insbesondere ist vorgesehen, dass die Handhabungseinrichtung 5 zuerst von den am ersten Palettenstellplatz 30-1 bereitgestellten Verpackungsmitteln 20 jeweils einen Verpackungsstapel 22 aufnimmt, diesen zur Versetzeinheit 8 verbringt, damit der Versatz V (Vergleiche Figuren 1 und 2) hergestellt werden kann und anschließend die mit Versatz ausgestatteten Verpackungsmittelstapel 22sv unter Drehung auf der zweiten Transporteinrichtung 4 anordnet.

Ist die am ersten Palettenstellplatz 30-1 bereitgestellte Palette 31 leer, werden nunmehr durch die Handhabungseinrichtung 5 Verpackungsmittelstapel 22 von der am zweiten Palettenstellplatz 30-2 bereitgestellten Palette 31 entnommen. Währenddessen kann die leere Palette 31 am ersten Palettenstellplatz 30-1 durch eine neue Palette 31 ersetzt werden, welche neue Palette 31 mit Verpackungsmitteln 20 bestückt ist.

Mehrere Palettenstellplätze 30 bieten den Vorteil, dass bei einem Palettenwechsel 31 von einer leeren Palette 31 gegen eine mit Kartonzuschnitten 21 beladenen Palette 31 eine kontinuierliche Zuschnittsversorgung gewährleistet werden kann, weil zwischenzeitlich jeweils die Kartonzuschnitte 21 von der weiteren bereits bereitgestellten Palette 31 abgenommen werden. Bei einem Sortenwechsel kann beispielsweise auf einen Palettenstellplatz 30-1 schon die nächste Sorte Verpackungsmittel 20 vorbereitet werden, während noch die aktuell verarbeitete Sorte Verpackungsmittel 20 vom Palettenstellplatz 30-2 entnommen wird.

Bei Bedarf kann bei allen vorbeschriebenen und nachfolgend beschriebenen Ausführungsformen die Reichweite der Handhabungseinrichtung 5 erhöht werden, wenn diese beweglich ausgebildet ist. Beispielsweise kann vorgesehen sein, dass die Handhabungseinrichtung 5 entlang der zweiten Transporteinrichtung 4 auf einer Linearachse o.ä. beweglich angeordnet ist.

Eine Ausführungsform kann vorsehen, dass die Handhabungseinrichtung 5 nicht nur für die Handhabung der Kartonzuschnitte 21 ausgebildet und ausgestattet ist. Insbesondere wird die Handhabungseinrichtung 5 hierfür nicht dauerhaft während des Produktionsprozesses benötigt. Stattdessen kann die Handhabungseinrichtung verwendet werden, um in solchen sogenannten Stillzeiten weitere Module der Verpackungsanlage 1 bei Bedarf mit Verbrauchsmaterial zu versorgen, beispielsweise kann eine beweglich ausgebildete Handhabungseinrichtung 5 verwendet werden, um Folienrollen an einem Folieneinschlagmodul nachzulegen, oder um Etikettenrollen an einem Etikettiermodul nachzulegen usw.

Insbesondere kann die Handhabungseinrichtung 5 hierfür auf einem Schienensystem angeordnet sein, über welches die Handhabungseinrichtung 5 zu den jeweiligen Modulen bewegt werden kann. Alternativ kann vorgesehen sein, dass die Handhabungseinrichtung auf einem fahrerlosen Transportsystem angeordnet ist, wodurch die Flexibilität der Anwendung weiter erhöht werden kann, da der Bewegungsraum im Vergleich zu einem Schienensystem nicht auf definierte Wege begrenzt ist.

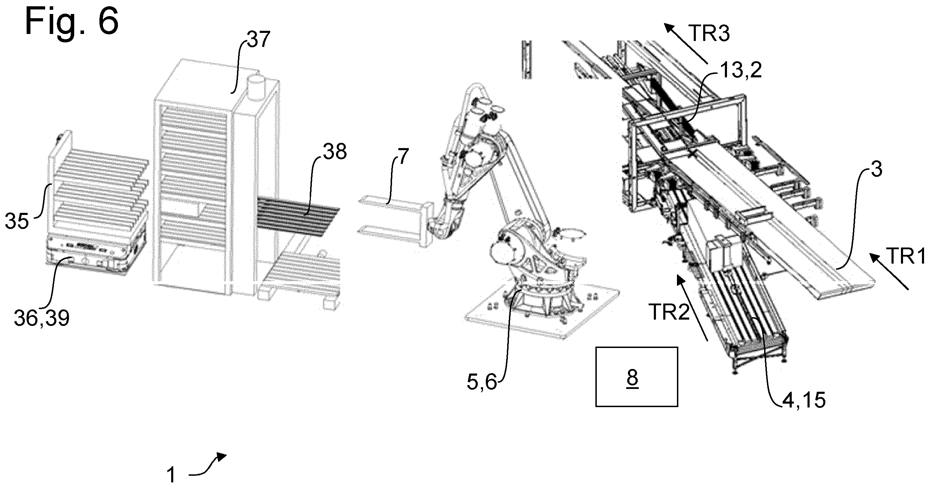

Die Fig. 6 zeigt eine dritte Ausführungsform einer Verpackungsanlage 1. Hierbei werden die gestapelten Verpackungsmittel (nicht dargestellt) in einer Magazineinheit 35 bereitgestellt, welche beispielsweise auf einem fahrerlosen Transportsystem 36 angeordnet ist.

Beispielsweise werden Verpackungsmittelstapel in einer zentralen Handhabungseinheit (nicht dargestellt) von einer Palette entnommen und in die Magazineinheit 35 übergeben. Bei Bedarf kann es auch sinnvoll sein, dass die Verpackungsmittelstapel hierbei in einer Zentriereinrichtung zentriert, in einer Puffereinrichtung zwischengelagert und mit einer Beladeeinrichtung an die Magazineinheit 35 übergeben werden.

Das fahrerlose Transportsystem 36 dient zum Transport der mit Stapeln an Kartonzuschnitten ausgestatteten Magazineinheit 35 an die benötigte Position, welche Position insbesondere benachbart zu der zweiten Transporteinrichtung 4 bzw. Schrägmagazin 15 ausgebildet ist. Zum Aufnehmen der Magazineinheit 35 ist das fahrerlose Transportsystem 36 bevorzugt mit einer Hubeinrichtung 39 ausgestattet.

Die komplette Beladung einer Magazineinheit 35 mit den darin angeordneten Verpackungsmittelstapeln kann auch optional an eine am Schrägmagazin 15 angeordnete Puffereinrichtung 37 übergeben werden.

Die Verpackungsmittelstapel werden zur Aufnahme durch das Greifelement 7 der Handhabungseinrichtung 5 mit einem Gabellift 38 aus der der Magazineinheit 35 oder der Puffereinrichtung 37 entnommen und vor der Übergabe an das und Anordnung in dem Schrägmagazin 15 werden die Verpackungsmittel vermittels der Versetzeinheit 8 gegeneinander versetzt.

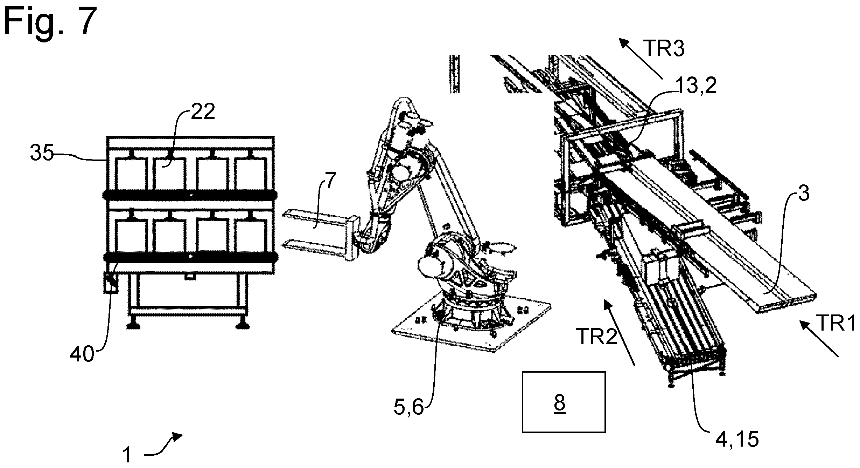

Die Fig. 7 zeigt eine vierte Ausführungsform einer Verpackungsanlage 1, bei welcher die Verpackungsmittel als Verpackungsmittelstapel 22 in einer mit Förderbändern 40 ausgestatteten Magazineinheit 35 am Schrägmagazin 15 bereitgestellt werden. Hierbei ist die Magazineinheit 35 beispielsweise mit geteilten Mattenbahnen ausgestattet. In Bezug auf die Ausbildung der versetzen Anordnung der Verpackungsmittel innerhalb eines entnommenen Verpackungsmittelstapels 22 und Anordnung derselben auf das Schrägmagazin 15 bildenden zweiten Transporteinrichtung 4 wird auf die Beschreibung der vorherigen Figuren verwiesen.

Die Fig. 8 zeigt eine fünfte Ausführungsform einer Verpackungsanlage 1, bei welchem Verpackungsmittelstapel 22s mit in stehender Anordnung angeordneten Verpackungsmitteln 20s in einer Magazineinheit 35 bereitgestellt werden und Fig. 9 zeigt einen vergrößerten Ausschnitt einer in Fig. 8 dargestellten Magazineinheit 35.

Die Verpackungsmittel 20 werden beispielsweise in einer zentralen Handhabungseinheit (nicht dargestellt) in die Magazineinheit 35 eingebracht und in dieser angeordnet.

Insbesondere ist die in Fig. 8 dargestellte Magazineinheit 35 mit einer Mehrzahl an Versetzeinheiten 8 ausgestattet. Die Verpackungsmittel 20s werden stapelweise direkt in die Versetzeinheiten 8 der Magazineinheit 35 eingesetzt, wobei sich die Verpackungsmittel 20 innerhalb der Verpackungsmittelstapel 22 in stehender Anordnung befinden. Aufgrund der schräg ausgebildeten Aufsetzfläche 10 der Versetzeinheiten 8 werden Verpackungsmittelstapel 22sv1 ausgebildet, bei welchen sich die Verpackungsmittel 20 in vertikal zueinander versetzter Anordnung befinden.

In diesem Zusammenhang wird insbesondere auf die Beschreibung zu den Figuren 2 verwiesen, die die Herstellung des Versatzes V aufgrund der Ausgestaltung der Versetzeinheiten 8 detailliert beschreiben.

Die mit den Verpackungsmittelstapeln 22sv1 bestückte Magazineinheit 35 kann nunmehr durch ein fahrerloses Transportsystem 36 zu einem Bereitstellungsplatz 41 gebracht und vermittels einer dem fahrerlosen Transportsystem 36 zugeordneten Hubeinrichtung 39 am Bereitstellungsplatz 41 angeordnet werden.

Die mit Versatz ausgestatteten Verpackungsmittelstapel 22sv1 können durch das Greifelement 7 der Handhabungseinrichtung 5 seitlich aus der Magazineinheit 35 entnommen und unter Drehung um eine Flächennormale N auf der zweiten Transporteinrichtung 4 des Schrägmagazins 15 angeordnet werden.

Um die Entnahme der Verpackungsmittelstapel 22sv1 aus der Magazineinheit 35 von beiden Seiten zu ermöglichen, kann im Bereitstellungsplatz 41 eine Drehvorrichtung integriert sein.

Eine alternative (nicht dargestellte) Ausführungsform kann vorgesehen, dass eine Magazineinheit umfassend ein oder mehrere Stapelmagazine vorgesehen ist. In den Stapelmagazinen werden die Kartonzuschnitte, welche von einer zentralen Handhabungseinheit von einer Palette abgenommen werden, vorzugsweise derart stapelweise angeordnet, dass die Kartonzuschnitte übereinander liegend angeordnet sind.

Die Stapel an Kartonzuschnitten sind im Stapelmagazin zentriert angeordnet und insbesondere durch eine Einhausung, beispielsweise aus Blech o.ä., eingerahmt. Diese Einhausung dient als Anschlag bei der Entnahme von Verpackungsmittelstapeln durch die Handhabungseinrichtung 5.

Die Kartonzuschnitte werden durch die der zweiten Transporteinrichtung 4 zugeordneten Handhabungseinrichtung 5 als Verpackungsmittelstapel aus einem Stapelmagazin entnommen, einer Versetzeinheit 8 zugeführt und anschließend in mit Versatz ausgestatteter Anordnung auf der zweiten Transporteinrichtung 4 angeordnet.

Eine weitere alternative Ausführungsform (nicht dargestellt) kann vorsehen, dass der zentralen Handhabungseinheit eine Versetzeinheit oder eine alternative Vorrichtung zum Verschränken und Ausrichten der Kartonzuschnitte zugeordnet ist, so dass die Handhabungseinheit die Kartonzuschnitte bereits mit Versatz ausgestattet als Verpackungsmittelstapel in einem Stapelmagazin der Magazineinheit ablegt. Die entsprechend mit Versatz ausgestatteten Verpackungsmittelstapel werden anschließend durch die Handhabungseinrichtung aus dem Stapelmagazin entnommen und direkt auf der zweiten Transporteinrichtung angeordnet.

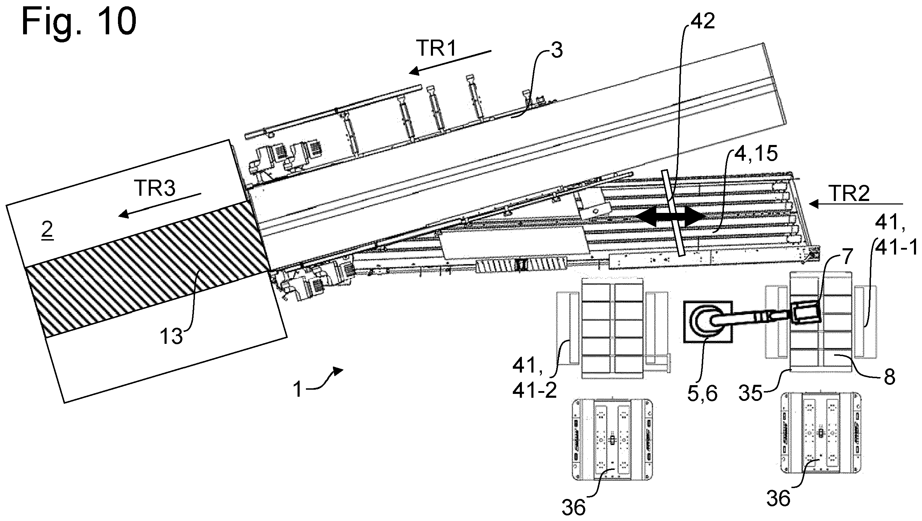

Die Fig. 10 zeigt eine sechste Ausführungsform einer Verpackungsanlage 1. Hierbei sind zwei Bereitstellungsplätze 41-1, 41-2 für Magazineinheiten 35 vorgesehen, welche Magazineinheiten 35 analog zu der in den Figuren 8 und 9 beschriebenen Ausführungsform insbesondere mit Versetzeinheiten 8 ausgestattet sind.

In Reichweite der insbesondere stationären Handhabungseinrichtung 5 mit Greifelement 7 befinden sich das Schrägmagazin 15 und wenigstens ein Bereitstellungsplatz 41. Mehrere Bereitstellungsplätze 41 bieten den Vorteil, dass bei einem Wechsel von einer Magazineinheit 35 gegen eine mit Verpackungsmaterial 20 beladene Magazineinheit 35 eine kontinuierliche Versorgung mit Verpackungsmaterial 20 gewährleistet werden kann, weil zwischenzeitlich die entsprechenden Verpackungsmaterialstapel 22 von der weiteren bereits bereitgestellten Magazineinheit 35 entnommen werden können. Bei einem Sortenwechsel kann beispielsweise auf dem Bereitstellungsplatz 41-2 schon die nächste Sorte an Verpackungsmaterial 20 vorbereitet werden, während noch die aktuell verarbeitete Sorte an Verpackungsmaterial 20 vom Bereitstellungsplatz 41-2 abgenommen wird.

Im Zusammenhang mit den dargestellten Ausführungsformen kann insbesondere aufgrund der eingeschränkten Zugänglichkeit des Schrägmagazins 15 und der begrenzten Reichweite der Handhabungseinrichtung 5 vorgesehen sein, dass dem Schrägmagazin 15 im Bereich unterhalb der ersten Transporteinrichtung 3 des Artikelzulaufs ein in Fig. 10 beispielhaft dargestellter Stellbalken 42 zugeordnet ist. Der Stellbalken 42 kann entlang des Schrägmagazins 15 zur Handhabungseinrichtung 5 hin verfahren werden, um ein erleichtertes Befüllen und Entleeren des gesamten Schrägmagazin 15 zu ermöglichen.

Beispielsweise ist vorgesehen, dass im normalen Produktionsbetrieb der Stellbalken 42 und die zweite Transporteinrichtung 4 vorzugsweise synchron durch Servoantriebe angetrieben werden. Zur Kraftübertragung können für die Bewegung des Stellbalkens 42 entsprechende Zugmittel, beispielsweise Zahnriemen, Kette o.ä., oder auch ein Spindelantrieb zum Einsatz kommen.

Die beschriebenen Ausführungsformen ermöglichen die automatisierte Befüllung eines Schrägmagazins mit Verpackungsmitteln 20. Die hier beschriebene Automatisierung des Schrägmagazins 15 trägt auch zur Ergonomieverbesserung bei einem gegebenenfalls manuellen Nachfüllen und Entleeren des Schrägmagazins 15 bei. Der Bediener muss nicht mehr, wie bisher, unter die erste Transporteinrichtung 3 des Artikelzulaufs klettern, um an die Kartonzuschnitte 21 am vorderen Ende des Schrägmagazins 15 heran zu kommen.

Es ist auch denkbar, dass die zweite Transporteinrichtung 4 zum automatisierten Nachfüllen linear an das Verpackungsmodul 2 anschließt und unterhalb der ersten Transporteinrichtung 3 angeordnet ist. In diesem Fall ist es nicht notwendig, einen Versatz der Verpackungsmittel innerhalb eines Verpackungsmittelstapels herzustellen, wodurch das Anordnen der Verpackungsmittel auf der zweiten Transporteinrichtung 4 vereinfacht wird.

Weiterhin kann vorgesehen sein, dass die zweite Transporteinrichtung 4 mit einer auf Rollen gelagerten Stapelstütze (nicht dargestellt) ausgestattet ist. Die Stapelstütze kann insbesondere vermittels eines Pneumatikzylinders bewegt werden. Der Pneumatikzylinder ist bevorzugt an einem Halter angeordnet, welcher durch das Aufliegen auf einer Kettenspur der zweiten Transporteinrichtung 4 eine Vorschubkraft erzeugt. Optional kann eine zusätzliche Last auf dem Halter die Vorschubkraft erhöhen.

Es ist auch denkbar, dass die Stapelstütze durch einen Elektromotor mit Zahnriemen, Kette, Spindel o. ä. angetrieben wird.

Um das Schrägmagazin 15 bzw. die zweite Transporteinrichtung 4 mit Verpackungsmittel zu befüllen oder nachzufüllen, kann vorgesehen sein, dass der durch das Greifelement 7 erfasste Verpackungsmittelstapel 22, insbesondere der mit Versatz ausgestattete und um eine Flächennormale N gedrehte Verpackungsmittelstapel 22sv2, an das Stapelende der bereits auf der zweiten Transporteinrichtung 4 angeordneten Verpackungsmittel 20 anschließend angeordnet wird.

Das Greifelement 7 mit dem erfassten Verpackungsmittelstapel 22sv verfolgt das Stapelende, welches sich in der zweiten Transportrichtung TR2 bewegt, durch eine Nachführbewegung der Handhabungseinrichtung 5. Dadurch wird verhindert, dass Verpackungsmittel am Stapelende beim Zurückziehen der Stapelstütze nach hinten umfallen. Die Nachführbewegung wird während des gesamten nachfolgend beschrieben Ablaufs beibehalten.

Die Stapelstütze wird zurückgezogen, um eine Lücke für die Anordnung des vom Greifelement 7 erfassten Verpackungsmittelstapel 22sv auszubilden. Der Verpackungsmittelstapel 22sv wird nunmehr durch das Greifelement auf der zweiten Transporteinrichtung 4 angeordnet, insbesondere durch Absenken und Öffnen des Greifelementes 7. Bei Bedarf kann das Greifelement 7 hierbei in einem geeigneten Winkel angestellt werden.

Das Greifelement 7 wird anschließend nach oben gezogen, sodass die Stapelstütze unterhalb durchtauchen kann. Die Stapelstütze wird durch Ausfahren des Pneumatikzylinders wieder angestellt. Dabei wird der Halter auf der Kettenspur nach hinten geschoben. Aufgrund des Reibkontakts zwischen Halter und Kettenspur wird eine Kraft auf das Stapelende ausgeübt.

Grundsätzlich ist es denkbar, dass zum Entleeren des Schrägmagazins 15, z. B. bei einem Sortenwechsel, die Verpackungsmittel 20 stapelweise wieder vom Schrägmagazin 15 mit einem Greifer entnommen werden und auf eine Palette 31 oder in eine Magazineinheit 35 oder in ein anderes Puffersystem abgelegt werden, um anschließend den Rücktransport zur zentralen Handhabungseinheit oder in ein Lager zu ermöglichen. Eine Ausführungsform sieht vor, dass die Handhabungseinrichtung 5 auch beim Entleeren des Schrägmagazins 15 Verwendung findet.

Eine Ausführungsform kann vorsehen, dass die auf der zweiten Transporteinrichtung 4 angeordneten Kartonzuschnitte 21 beispielsweise bei einem Produktwechsel mit Hilfe des am vordersten Kartonzuschnitt 21 anliegenden Stellbalkens 42 entgegen der zweiten Transportrichtung TR2 auf der zweiten Transporteinrichtung 4 von dem Verpackungsmodul 2 wegtransportiert werden. Dadurch kann die Entnahme der Kartonzuschnitte 21 und somit das Entleeren des Schrägmagazins 15 erleichtert werden, da die Kartonzuschnitte 21 in einen besser für die Handhabungseinrichtung 5, eine andere Entnahmevorrichtung, einen Bediener o.ä. zugänglichen Bereich des Schrägmagazins befördert werden können. Insbesondere werden die Kartonzuschnitte 21 für die Entnahme aus dem Schrägmagazin 15 in einen Bereich transportiert, welcher beispielsweise durch eine in ihrer Reichweite begrenzte Handhabungseinrichtung 5 erreicht werden kann. Oder aber die Kartonzuschnitte 21 werden in einen Bereich der zweiten Transporteinrichtung 4 transportiert, welche nicht von der ersten Transporteinrichtung 4 überdeckt und somit besser zugänglich ist.

Mit den vorbeschriebenen Möglichkeiten ist eine vollautomatisierte Zuschnittsversorgung für das Schrägmagazin 15 möglich. Prinzipiell ist es möglich, das System so auszuführen, dass bei einem Sortenwechsel die im Schrägmagazin 15 noch vorhandenen Verpackungsmittel 20 automatisiert wieder entnommen werden und in einem Magazin, Lager oder Zwischenlager der Verpackungsanlage 1 angeordnet werden oder zu einer zentralen Handhabungseinheit zugeführt werden.

Eine oder mehrere Magazineinheiten 35 für Verpackungsmittel können beispielsweise genutzt werden, um zusammen mit einer mobilen Handhabungseinrichtung 5 eine Mehrzahl von Verpackungsanlagen 1 versorgen.

Im Zusammenhang mit einer stationären Handhabungseinrichtung 5 kann hier ein hoher Automatisierungsgrad bei der Versorgung mit flächigen Verpackungsmitteln 20 erreicht werden.

Das System ist durch das Hinzufügen von weiteren Einheiten, insbesondere Magazineinheiten 35 und/oder Handhabungseinrichtungen 5, flexibel erweiterbar.

Die Bedienertätigkeiten bezüglich des Nachfüllens von Verpackungsmitteln 20 werden stark reduziert; Resttätigkeiten können sowohl örtlich als auch zeitlich gebündelt werden.

Weiterhin zeichnet sich das beschriebene System durch eine Ergonomieverbesserung für den Bediener beim manuellen Nachfüllen durch eine Teilautomatisierung oder Vollautomatisierung des Schrägmagazins 15 aus, insbesondere durch den verfahrbaren Stellbalken 42 und/oder die automatisierte Stapelstütze.

Durch das modulare Wechselsystem ist das gesamte System flexibler, redundanter und kostengünstiger als bisher bekannte Systeme.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der voranstehenden Figurenbeschreibung generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Verpackungsmittel und/oder Teilen der Verpackungsanlage oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Die Erfindung ist durch den nachstehenden Ansprüche definiert.

### Bezugszeichenliste

- 1: Verpackungsanlage
- 2: Verpackungsmodul
- 3: erste Transporteinrichtung
- 4: zweite Transporteinrichtung
- 5: Handhabungseinrichtung
- 6: Knickarmroboter
- 7: Greifelement
- 8: Versetzeinheit
- 9: Seitenwand
- 10: Aufstandsfläche
- 11: Greifeinrichtung
- 12: Klemmbacken
- 13: dritte Transporteinrichtung
- 15: Schrägmagazin
- 20: Verpackungsmittel
- 20l: Verpackungsmittel liegend
- 20s: Verpackungsmittel stehend
- 21: Kartonzuschnitt
- 22: Verpackungsmittelstapel
- 22l: Verpackungsmittelstapel liegend
- 22s: Verpackungsmittelstapel stehend
- 22sv1: Verpackungsmittelstapel in regelmäßig versetzter oder abgestufter erster Ausrichtung
- 22sv2: Verpackungsmittelstapel in regelmäßig versetzter oder abgestufter zweiter Ausrichtung
- 25: Aufstandskante
- 26: erste Seitenkante
- 30: Palettenstellplatz
- 30-1: erster Palettenstellplatz
- 30-2: zweiter Palettenstellplatz
- 31: Palette
- 32: Anschlagwand
- 33: Dreheinrichtung
- 34: Sensorsystem
- 35: Magazineinheit
- 36: fahrerloses Transportsystem
- 37: Puffereinrichtung
- 38: Gabellift
- 39: Hubeinrichtung
- 40: Förderband
- 41: Bereitstellungsplatz
- 42: Stellbalken

- α: (erster) Winkel
- β1: (zweiter) Winkel
- β2: (zweiter) Winkel
- γ1: Winkel
- γ2: Winkel
- H: Horizontale
- N: Flächennormale
- TR1: erste Transportrichtung
- TR2: zweite Transportrichtung
- TR3: dritte Transportrichtung
- V: Versatz

## Patentansprüche

1. Verpackungsanlage (1) umfassend
ein Verpackungsmodul (2),
eine erste Transporteinrichtung (3) für die Zuführung von Artikeln zum Verpackungsmodul (2) in einer ersten Transportrichtung (TR1),
und eine zweite Transporteinrichtung (4) für die Zuführung von flächigen, in einer ersten stehenden Ausrichtung (22sv1) angeordneten Verpackungsmitteln (20) in einer zweiten Transportrichtung (TR2), welche zweite Transportrichtung (TR2) von der ersten Transportrichtung (TR1) abweicht,
wobei die Verpackungsanlage (1) weiterhin umfasst:
eine Handhabungseinrichtung (5) zur Anordnung der flächigen Verpackungsmittel (20) auf der zweiten Transporteinrichtung (4),
**dadurch gekennzeichnet, dass**
die Verpackungsanlage (1) mindestens eine Versetzeinheit (8) umfasst, welche Versetzeinheit (8) dazu ausgebildet ist, eine Mehrzahl von in stehender Anordnung befindlichen Verpackungsmittel (20) gegeneinander zu versetzen, welche Versetzeinheit (8) vertikal ausgerichtete Seitenwände (9) und eine Aufstandsfläche (10) aufweist, wobei zwischen den Seitenwänden (9) und der Aufstandsfläche (10) jeweils ein von 90 Grad abweichender Winkel ausgebildet ist.

2. Verpackungsanlage (1) nach Anspruch 1, wobei die Handhabungseinrichtung (5) dazu ausgebildet ist, einen Stapel (22) von in einer ersten stehenden Ausrichtung (22sv1) und versetzt zueinander angeordneten Verpackungsmitteln (20) in einer zweiten stehenden Ausrichtung (22sv2) auf der zweiten Transporteinrichtung (4) anzuordnen, welche zweite Ausrichtung sich durch eine um 90 Grad zu einer Flächennormalen (N) der Verpackungsmittel (20) verdrehte Ausrichtung der Verpackungsmittel (20) auszeichnet.

3. Verpackungsanlage (1) nach Anspruch 2, wobei die Handhabungseinrichtung (5) dazu ausgebildet ist, die Verpackungsmittel (20) derart auf der zweiten Transporteinrichtung (4) anzuordnen, dass eine Flächennormale (N) der Verpackungsmittel (20) in einer Ebene parallel zu einer Vertikalebene angeordnet ist, welche Vertikalebene eine dritte Transporteinrichtung (13) der Verpackungsmittel (20) innerhalb des Verpackungsmoduls (2) umfasst.

4. Verpackungsanlage (1) nach einem der voranstehenden Ansprüche, wobei zwischen der zweiten Transporteinrichtung (4) und der dritten Transporteinrichtung (13) ein erster Winkel (α) ausgebildet ist, welcher erste Winkel (α) größer als 90 Grad und kleiner 180 Grad ist, insbesondere welcher erste Winkel (α) zwischen 150 Grad und 175 Grad ausgebildet ist, besonders bevorzugt welcher erste Winkel (α) 165 Grad ist.

5. Verpackungsanlage (1) nach einem der Ansprüche 2 bis 4, bei welcher zwischen der zweiten Transportrichtung (TR2) und der Flächennormalen (N) der auf der zweiten Transporteinrichtung (4) angeordneten Verpackungsmittel (20) ein zweiter Winkel (β2) ausgebildet ist, welcher zweite Winkel (β2) kleiner als 90 Grad und größer als 0 Grad ausgebildet ist, insbesondere welcher zweite Winkel (β2) zwischen 5 Grad und 30 Grad ausgebildet ist, besonders bevorzugt welcher Winkel (β2) 15 Grad ist.

6. Verpackungsanlage (1) nach Anspruch 5, wobei die Summe der Beträge des ersten Winkels (α) und des zweiten Winkels (β2) 180 Grad ist.

7. Verpackungsanlage (1) nach einem der voranstehenden Ansprüche, wobei der Verpackungsanlage (1) ein Magazin (35) für Verpackungsmittel (20) zugeordnet ist, welches Magazin (35) eine Mehrzahl von Versetzeinheiten (8) umfasst.

8. Verpackungsanlage (1) nach einem der voranstehenden Ansprüche, wobei eine Transportfläche der zweiten Transporteinrichtung (4) eine Neigung gegenüber einer Horizontalebene aufweist, insbesondere wobei die Transportfläche der zweiten Transporteinrichtung (4) in Richtung des Verpackungsmoduls (2) ansteigend ausgebildet ist.

9. Verfahren zur Zuführung von flächigen Verpackungsmitteln (20) zu einer Verpackungsanlage (1),
wobei Artikel über eine erste Transporteinrichtung (3) in einer ersten Transportrichtung (TR1) einem Verpackungsmodul (2) der Verpackungsanlage (1) zugeführt werden,
wobei die flächigen Verpackungsmittel (20) über eine zweite Transporteinrichtung (4) in einer zweiten Transportrichtung (TR2) dem Verpackungsmodul (2) der Verpackungsanlage (1) zugeführt werden,
wobei ein flächiges Verpackungsmittel (20) innerhalb des Verpackungsmoduls (2) aufgefaltet und in welchem aufgefalteten Verpackungsmittel (20) zur Ausbildung einer Verpackungseinheit mindestens ein Artikel angeordnet wird,
**dadurch gekennzeichnet, dass**
die Verpackungsmittel (20) eines eine Mehrzahl von in einer ersten stehenden Ausrichtung (22sv1) angeordneten Verpackungsmittel (20) umfassenden Verpackungsmittelstapels (22) gegeneinander versetzt werden,
wonach der Verpackungsmittelstapel (22) mit den gegeneinander versetzten Verpackungsmitteln (20) um 90 Grad zu einer Flächennormalen (N) der Verpackungsmittel (20) in eine zweite stehende Ausrichtung (22sv2) verdreht und in dieser zweiten stehenden Ausrichtung (22sv2) auf der zweiten Transporteinrichtung (4) angeordnet werden.

10. Verfahren nach Anspruch 9, wobei die Verpackungsmittel (20) derart auf der zweiten Transporteinrichtung (4) angeordnet werden, dass zwischen einer Flächennormalen (N) des Verpackungsmittels (20) und der zweiten Transportrichtung (TR2) ein zweiter Winkel (β2) ausgebildet ist, welcher zweite Winkel (β2) kleiner als 90 Grad und größer als 0 Grad ausgebildet ist, insbesondere welcher zweite Winkel (β2) zwischen 5 Grad und 30 Grad ausgebildet ist, besonders bevorzugt welcher zweite Winkel (β2) 15 Grad ist.

11. Verfahren nach Anspruch 10, wobei die Verpackungsmittel (20) auf der zweiten Transporteinrichtung (4) derart angeordnet werden, dass sich eine Flächennormale (N) des Verpackungsmittels auf der zweiten Transporteinrichtung (4) und eine dritte Transportrichtung (TR3) des Verpackungsmittels innerhalb der Verpackungsanlage (1) innerhalb einer Vertikalebene oder innerhalb paralleler Vertikalebenen befinden.

## Claims

1. A packaging facility (1), comprising
a packaging module (2),
a first transport device (3) for the feed of articles in a first transport direction (TR1) to the packaging module (2),
and a second transport device (4) for the feed of flat packaging means (20), which are arranged in a first upright standing alignment (22sv1), in a second transport direction (TR2), which second transport direction (TR2) deviates from the first transport direction (TR1),
wherein the packaging facility (1) furthermore comprises:
a handling device (5) for the arrangement of the flat packaging means (20) on the second transport device (4),
**characterised in that**
the packaging facility (1) comprises at least one displacement unit (8), which displacement unit (8) is designed to displace a plurality of packaging means (20) relative to each other, which packaging means (20) are in an upright standing arrangement,
which displacement unit (8) has vertically aligned side walls (9) and a standing surface (10), wherein an angle deviating from 90 degrees is in each case formed between the side walls (9) and the standing surface (10).

2. The packaging facility (1) according to claim 1, wherein the handling device (5) is designed to arrange a stack (22) of packaging means (20), which are arranged in a first upright standing alignment (22sv1) and displaced offset to each other, in a second upright standing alignment (22sv2) on the second transport device (4), which second alignment is **characterised by** an alignment of the packaging means (20) rotated by 90 degrees relative to a surface normal (N) of the packaging means (20).

3. The packaging facility (1) according to claim 2, wherein the handling device (5) is designed to arrange the packaging means (20) on the second transport device (4) in such a manner that a surface normal (N) of the packaging means (20) is arranged in a plane parallel to a vertical plane, which vertical plane comprises a third transport device (13) of the packaging means (20) within the packaging module (2).

4. The packaging facility (1) according to one of the previous claims, wherein a first angle (α) is formed between the second transport device (4) and the third transport device (13), which first angle (α) is greater than 90 degrees and smaller than 180 degrees, in particular, which first angle (α) is formed to be between 150 degrees and 175 degrees, particularly preferably, which first angle (α) is 165 degrees.

5. The packaging facility (1) according to one of the claims 2 to 4, in which a second angle (β2) is formed between the second transport direction (TR2) and the surface normal (N) of the packaging means (20) arranged on the second transport device (4), which second angle (β2) is formed to be smaller than 90 degrees and greater than 0 degrees, in particular, which second angle (β2) is formed to be between 5 degrees and 30 degrees, particularly preferably, which angle (β2) is 15 degrees.

6. The packaging facility (1) according to claim 5, wherein the sum of the values of the first angle (α) and the second angle (β2) is 180 degrees.

7. The packaging facility (1) according to one of the previous claims, wherein a magazine (35) for the packaging means (20) is assigned to the packaging facility (1), which magazine (35) comprises a plurality of displacement units (8).

8. The packaging facility (1) according to one of the previous claims, wherein a transport surface of the second transport device (4) has an inclination relative to a horizontal plane, in particular, wherein the transport surface of the second transport device (4) is designed to slope upward toward the packaging module (2).

9. A method for the feed of flat packaging means (20) to a packaging facility (1),
wherein articles are fed in a first transport direction (TR1) via a first transport device (3) to a packaging module (2) of the packaging facility (1),
wherein the flat packaging means (20) are fed in a second transport direction (TR2) via a second transport device (4) to the packaging module (2) of the packaging facility (1),
wherein a flat packaging means (20) is unfolded within the packaging module (2),
and in which unfolded packaging means (20) at least one article is arranged to form a packaging unit,
**characterised in that**
the packaging means (20) of a stack of packaging means (22), the stack comprising a plurality of packaging means (20) arranged in a first upright standing alignment (22sv1), are displaced offset relative to each other,
whereafter the stack of packaging means (22) with the packaging means (20) displaced offset relative to each other is rotated by 90 degrees relative to a surface normal (N) of the packaging means (20) into a second upright alignment (22sv2) and is arranged in this second upright alignment (22sv2) on the second transport device (4).

10. The method according to claim 9, wherein the packaging means (20) are arranged on the second transport device (4) in such a manner that a second angle (β2) is formed between a surface normal (N) of the packaging means (20) and the second transport direction (TR2), which second angle (β2) is formed to be smaller than 90 degrees and greater than 0 degrees, in particular, which second angle (β2) is formed to be between 5 degrees and 30 degrees, particularly preferably, which second angle (β2) is 15 degrees.

11. The method according to claim 10, wherein the packaging means (20) are arranged on the second transport device (4) in such a manner that a surface normal (N) of the packaging means on the second transport device (4) and a third transport direction (TR3) of the packaging means within the packaging facility (1) are located within a vertical plane or within parallel vertical planes.

## Revendications

1. Système d'emballage (1) comprenant:
un module d'emballage (2),
un premier dispositif de transport (3) destiné à amener des articles au module d'emballage (2) selon une première direction de transport (TR1),
et un deuxième dispositif de transport (4) destiné à amener des moyens d'emballage plans (20) disposés dans une première orientation verticale (22sv1), selon une deuxième direction de transport (TR2), laquelle deuxième direction de transport (TR2) est différente de la première direction de transport (TR1),
dans lequel le système d'emballage (1) comprend en outre:
un dispositif de manipulation (5) destiné à disposer les moyens d'emballage plans (20) sur le deuxième dispositif de transport (4),
**caractérisé par le fait que**
le système d'emballage (1) comprend au moins une unité de décalage (8), laquelle unité de décalage (8) est configurée pour décaler les uns par rapport aux autres une pluralité de moyens d'emballage (20) se trouvant dans une disposition verticale,
laquelle unité de décalage (8) présente des parois latérales (9) orientées verticalement et une surface d'appui (10), dans lequel respectivement un angle différent de 90 degrés est formé entre les parois latérales (9) et la surface d'appui (10).

2. Système d'emballage (1) selon la revendication 1, dans lequel le dispositif de manipulation (5) est configuré pour disposer une pile (22) de moyens d'emballage (20) disposés selon une première orientation verticale (22sv1) et de manière décalée les uns par rapport aux autres, selon une deuxième orientation verticale (22sv2) sur le deuxième dispositif de transport (4), laquelle deuxième orientation est **caractérisée par** une orientation des moyens d'emballage (20) qui est tournée de 90 degrés par rapport à une normale à la surface (N) des moyens d'emballage.

3. Système d'emballage (1) selon la revendication 2, dans lequel le dispositif de manipulation (5) est configuré pour disposer les moyens d'emballage (20) sur le deuxième dispositif de transport (4) de telle sorte qu'une normale à la surface (N) des moyens d'emballage (20) soit située dans un plan parallèle à un plan vertical, lequel plan vertical comprend un troisième dispositif de transport (13) des moyens d'emballage (20) à l'intérieur du module d'emballage (2).

4. Système d'emballage (1) selon l'une quelconque des revendications précédentes, dans lequel un premier angle (α) est formé entre le deuxième dispositif de transport (4) et le troisième dispositif de transport (13), lequel premier angle (α) est supérieur à 90 degrés et inférieur à 180 degrés, en particulier lequel premier angle (α) est compris entre 150 degrés et 175 degrés, de manière particulièrement préférée lequel premier angle (α) est égal à 165 degrés.

5. Système d'emballage (1) selon l'une quelconque des revendications 2 à 4, dans lequel un deuxième angle (β2) est formé entre la deuxième direction de transport (TR2) et la normale à la surface (N) des moyens d'emballage (20) disposés sur le deuxième dispositif de transport (4), lequel deuxième angle (β2) est inférieur à 90 degrés et supérieur à 0 degré, en particulier lequel deuxième angle (β2) est compris entre 5 degrés et 30 degrés, de manière particulièrement préférée lequel angle (β2) est égal à 15 degrés.

6. Système d'emballage (1) selon la revendication 5, dans lequel la somme des valeurs du premier angle (α) et du deuxième angle (β2) est égale à 180 degrés.

7. Système d'emballage (1) selon l'une quelconque des revendications précédentes, dans lequel au système d'emballage (1) est associé un magasin (35) pour des moyens d'emballage (20), lequel magasin (35) comprend une pluralité d'unités de décalage (8).

8. Système d'emballage (1) selon l'une quelconque des revendications précédentes, dans lequel une surface de transport du deuxième dispositif de transport (4) présente une inclinaison par rapport à un plan horizontal, en particulier dans lequel la surface de transport du deuxième dispositif de transport (4) est conçue de manière à s'élever en direction du module d'emballage (2).

9. Procédé destiné à amener des moyens d'emballage plans (20) à un système d'emballage (1),
dans lequel des articles sont amenés à un module d'emballage (2) du système d'emballage (1) via un premier dispositif de transport (3) dans une première direction de transport (TR1),
dans lequel les moyens d'emballage plans (20) sont amenés au module d'emballage (2) du système d'emballage (1) via un deuxième dispositif de transport (4) dans une deuxième direction de transport (TR2),
dans lequel un moyen d'emballage plan (20) est déplié à l'intérieur du module d'emballage (2), et dans lequel au moins un article est disposé dans le moyen d'emballage déplié (20) pour former une unité d'emballage,
**caractérisé par le fait que**
les moyens d'emballage (20) d'une pile de moyens d'emballage (22) comprenant une pluralité de moyens d'emballage (20) disposés selon une première orientation verticale (22sv1) sont décalés les uns par rapport aux autres,
ce après quoi la pile de moyens d'emballage (22) avec les moyens d'emballage (20) décalés les uns par rapport aux autres est tournée de 90 degrés par rapport à une normale à la surface (N) des moyens d'emballage, dans une deuxième orientation verticale (22sv2) et est disposée dans cette deuxième orientation verticale (22sv2) sur le deuxième dispositif de transport (4).

10. Procédé selon la revendication 9, dans lequel les moyens d'emballage (20) sont disposés sur le deuxième dispositif de transport (4) de telle sorte qu'un deuxième angle (β2) est formé entre la normale à la surface (N) du moyen d'emballage (20) et la deuxième direction de transport (TR2), lequel deuxième angle (β2) est inférieur à 90 degrés et supérieur à 0 degré, en particulier lequel deuxième angle (β2) est compris entre 5 degrés et 30 degrés, de manière particulièrement préférée lequel deuxième angle (β2) est égal à 15 degrés.

11. Procédé selon la revendication 10, dans lequel les moyens d'emballage (20) sont disposés sur le deuxième dispositif de transport (4) de telle sorte qu'une normale à la surface (N) du moyen d'emballage sur le deuxième dispositif de transport (4) et une troisième direction de transport (TR3) du moyen d'emballage soient situées dans le système d'emballage (1) à l'intérieur d'un plan vertical ou à l'intérieur de plans verticaux parallèles.
